(19) Europäisches Patentamt
European Patent Office
Office européen des brevets

(11) **EP 1 963 440 B1**

(12) **EUROPÄISCHE PATENTSCHRIFT**

(45) Veröffentlichungstag und Bekanntmachung des Hinweises auf die Patenterteilung:
**17.10.2012 Patentblatt 2012/42**

(51) Int Cl.:
*C09C 1/64* *(2006.01)*     *C09C 1/00* *(2006.01)*
*C09D 5/00* *(2006.01)*     *C09D 7/12* *(2006.01)*
*C09D 11/02* *(2006.01)*

(21) Anmeldenummer: **06841105.7**

(22) Anmeldetag: **21.12.2006**

(86) Internationale Anmeldenummer:
**PCT/EP2006/012416**

(87) Internationale Veröffentlichungsnummer:
**WO 2007/076967 (12.07.2007 Gazette 2007/28)**

(54) **WEISSES, IR-STRAHLUNG REFLEKTIERENDES PIGMENT, DESSEN HERSTELLUNG UND VERWENDUNG**

WHITE PIGMENT REFLECTING IR RADIATION, PRODUCTION AND USE THEREOF

PIGMENT BLANC REFLECHISSANT LE RAYONNEMENT INFRAROUGE, SA PRODUCTION ET SON UTILISATION

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **21.12.2005 DE 102005061684**

(43) Veröffentlichungstag der Anmeldung:
**03.09.2008 Patentblatt 2008/36**

(60) Teilanmeldung:
**11162335.1 / 2 348 074**
**11162338.5 / 2 348 075**

(73) Patentinhaber: **Eckart GmbH**
**91235 Hartenstein (DE)**

(72) Erfinder:
• **SCHRAMM, Christian**
  **91217 Hersbruck (DE)**

• **HENGLEIN, Frank**
  **90409 Nürrnberg (DE)**
• **SCHMIDT, Ulrich**
  **91217 Hersbruck (DE)**
• **WEISS, Harald**
  **90765 Fürth (DE)**
• **BLEISTEINER, Jasmin**
  **91241 Kirchensittenbach (DE)**
• **GRÜNER, Michael**
  **91275 Auerbach (DE)**

(74) Vertreter: **Louis Pöhlau Lohrentz**
**Patentanwälte**
**Postfach 30 55**
**90014 Nürnberg (DE)**

(56) Entgegenhaltungen:
**EP-A1- 1 179 507     DE-A1- 4 140 195**
**DE-A1- 4 211 560     DE-A1- 19 501 307**
**FR-A1- 2 664 160     US-A- 5 271 770**

EP 1 963 440 B1

**Beschreibung**

Die Erfindung betrifft weitgehend weiße, IR-Strahlung reflektierende Pigmente sowie deren Herstellung als auch deren Verwendung.

Wandfarben werden üblicherweise mit Weißpigmenten wie Titandioxid oder Bariumsulfat pigmentiert. Auf Basis dieser weißen Grundfarbe werden durch Abtönen mit entsprechenden Farbpigmenten farbige Dispersionsfarben erhalten. Die Bestandteile der Dispersionsfarben wie beispielsweise Bindemittel, Pigmente und/oder Füllstoffe absorbieren jedoch zumindest teilweise IR-Strahlung. Daher wird die Wärmestrahlung nicht reflektiert und wird letztendlich nach Außen abgegeben.

Aus K. Rose, U. Posset, K.-H. Haas und M. Köhl, Farbe & Lack 108 (2002) S. 29 ist bekannt, dass mit $SiO_2$ beschichtete Aluminiumpigmente eine verbesserte Reflexion von IR-Strahlung in einer Dispersionsfarbe ermöglichen.

In "Komfort und Energieeffizienz durch Wärmedämmung", Prof. Dr. Beck, Otti-Profiforum "wärmedämmung im Bauwesen" 09. + 10. 03. 2005, Regensburg wird dargelegt, dass Rauminnenwände, die mit IR-reflektierenden Pigmenten enthaltende Wandfarben gestrichen werden, ein angenehmes Wohlfühlklima erzeugen. Der Mensch wirkt in einem Raum als schwarzer Strahler mit einem Maximum der abgestrahlten IR-Strahlung von ca. 10 $\mu$m. Obwohl die IR-Strahlung nur einen Anteil von wenigen Prozent des gesamten Wärmehaushaltes eines Innenraumes ausmacht, reagiert der Mensch subjektiv sehr empfindlich auf Strahlungssenken in einem Raum. Daher erzeugt eine gleichmäßige Reflexion der IR-Strahlung von den Wänden ein äußerst angenehmes "Wohlfühlklima".

Die Verwendung von beispielsweise Aluminiumpigmenten als IR-reflektierende Pigmente hat jedoch den Nachteil, dass die Wandfarbe ein metallisches Aussehen erhält. Dies ist in den meisten Fällen jedoch nicht erwünscht. Metallische Pigmente in einer Wandfarbe lassen ferner die Unebenheiten des Untergrundes deutlich hervortreten. Auch führt die Verwendung von Aluminiumpigmenten je nach Konzentration und Teilchengröße nachteiligerweise zu einer Vergrauung der Dispersionsfarbe. Die meisten Dispersionsfarben sind weiß, und weiße Dispersionsfarben werden auch als Grundlage für das Abtönen mit Farbpigmenten zur Herstellung farbiger Dispersionsfarben verwendet.

Die DE 42 11 560 A1 offenbart eine Beschichtung von Substraten, die u.a. Metallplättchen oder Mica-Pigmente sein können, mit Weißpigmenten einer Partikelgröße unter 1 $\mu$m. Die Pigmente sind lediglich mittels Sprühtrocknung ohne jegliche weitere Beschichtung auf das Substrat aufgebracht und besitzen daher eine mangelhafte Haftung auf diesem.

In der DE 100 10 538 A1 ist ein schmutzabweisender Beschichtungsstoff offenbart, der eine komplexe Zusammensetzung, die neben einer Vielzahl von Komponenten und Teilchen auch plättchenförmige Teilchen, wie Aluminiumpigmente, enthalten kann, offenbart. Bei dem aus der DE 100 10 538 A1 bekannten Beschichtungsstoff ist zum einen nachteilig, dass die Metallpigmente korrodieren können, und zum anderen, dass der Beschichtungsstoff ein metallisches Erscheinungsbild bzw. einen Metalleffekt aufweist.

Aus der DE 195 01 307 A1 sind farbige Aluminiumpigmente bekannt, bei denen Farbpigmente in eine Metalloxidmatrix, die nach einem Sol-Gel-Verfahren hergestellt wird, eingebunden sind. Die dabei erhaltenen Aluminiumpigmente sind farbig und metallisch glänzend.

Die US 5,037,475 offenbart ebenfalls eingefärbte Aluminiumpigmente, die mit Farbpigmenten belegt sind. Die Anbindung der Farbpigmente erfolgt hier zum einen über eine thermisch polymerisierte, ungesättigte mehrfach funktionelle Carbonsäure und zum anderen über einen Kunststoffüberzug. Nachteilig ist ebenfalls, dass die so hergestellten eingefärbten Aluminiumpigmente ein deutlich metallisches Erscheinungsbild aufweisen.

Auch aus der WO 91/04293 sind farbige und metallisch glänzende Metallpigmente bekannt.

Bei dem vorstehend genannten Stand der Technik sind stets Effektpigmente für den dekorativen Bereich beschrieben. Diese Pigmente weisen sowohl einen metallischen Effekt als auch eine Körperfarbe auf, da die Farbpigmente direkt auf der metallischen Oberfläche fixiert sind.

Die WO 96/23337 offenbart einen Anstrichstoff, mit zwei Teilchen, die einmal plättchenförmige Metallpigmente und zum anderen Weißpigmente, die im nahen Infrarotbereich eine möglichst hohe Absorption haben. Die Weißpigmente können auch auf den Metallpigmenten aufgebracht sein. Nicht offenbart wird jedoch, wie die Weißpigmente auf den Metallpigmenten fixiert sind.

Die WO 2005/007754 offenbart farbige Pigmente, die einen infrarot reflektierenden Kern mit einer Dicke unter 0,2 $\mu$m aufweisen. Hier sind keine weißen Pigmente offenbart und ebenfalls nicht, wie diese auf den Metallpigmenten fixiert sind.

Die DE 40 35 062 A1 offenbart ein IR reflektierendes Substrat, welches mit einer Lackschicht, die weiße, graue, schwarze oder bunte Pigmente enthalten kann, beschichtet ist. Hier sind keine Dispersionsfarben, die sich in gewohnter Weise auf Wände aufbringen lassen, offenbart.

Aus FR2664160 sind Pigmente auf der Basis von Aluminiumpartikeln bekannt, welche mit Weißpigmenten beschichtet sind.

US5271770 offenbart mit Titandioxid und Zirkoniumdioxid beschichtete Talkplättchen, die IR- und UV-Strahlung reflektieren.

EP1179507 offenbart ein weißes Aluminiumpigment, welches aus einem metallischen Aluminiumkern besteht, welcher wiederum mit einer Schichtenfolge Titandioxid-Siliciumdioxid-Titandioxid beschichtet wurde.

Gemäß der Lehre der DE 197 18 459 A1 sollen Metallpigmente verwendet werden, die eine weißliche bis gräuliche Oberfläche aufweisen. Diese weißliche bis gräuliche Oberfläche soll durch verschiedene chemische Reaktionen erzeugbar sein, wobei der DE 197 18 459 A1 jedoch nicht entnehmbar ist, welche Reaktionen unter welchen Bedingungen durchgeführt werden müssen, um die genannten Metallpigmente zu erhalten.

Es besteht mithin ein Bedarf an IR-reflektierenden Pigmenten, vorzugsweise Metallpigmenten, welche ein weißes Aussehen haben und bei denen ein etwaiger Metalleffekt unterdrückt ist. Eine weitere Aufgabe ist es, IR-reflektierende Pigmente, vorzugsweise Metallpigmente, bereitzustellen, die bei Verwendung in einem Applikationsmedium, wie beispielsweise einer Farbe oder einem Lack für das menschliche Auge nicht merklich sichtbar sind und zu keiner wesentlichen Vergrauung des Applikationsmediums führen.

Eine weitere Aufgabe der Erfindung ist es, ein IR-reflektierendes Pigment bereitzustellen, dass gegenüber dem Einfluss von Wasser und Alkalien korrosionsstabil ist. Das Pigment soll in Dispersionsfarben sowohl in einer Wandinnenfarbe als auch in einer Fassadenfarbe verwendbar sein.

Ferner ist es eine Aufgabe der vorliegenden Erfindung, ein kostengünstiges Verfahren zur Herstellung derartiger Pigmente bereitzustellen.

Die der Erfindung zugrunde liegende Aufgabe wird gelöst durch ein IR-Strahlung reflektierendes Pigment, umfassend einen IR-reflektierenden Kern, wobei der IR-Strahlung reflektierende Kern mit einer für IR-Strahlung im wesentlichen durchlässigen und im wesentlichen umhüllenden Beschichtung versehen ist und wobei das IR-Strahlung reflektierende Pigment im wesentlichen weiß ist.
Bevorzugte Weiterbildungen des erfindungsgemäßen Pigmentes sind in den Unteransprüchen 2 bis 23 angegeben.

Die Aufgabe wird ferner gelöst durch ein Verfahren zur Herstellung eines IR-Strahlung reflektierenden Pigments nach einem der Ansprüche 1 bis 23, wobei auf einen IR-reflektierenden Kern eine für IR-Strahlung im wesentlichen durchlässige Beschichtung zusammen mit Weißpigmenten und/oder mit sichtbares Licht streuenden partikelartigen Beschichtungsauswüchsen aufgebracht wird.

Bevorzugte Weiterbildungen des erfindungsgemäßen Verfahrens sind in den Unteransprüchen 25 bis 27 angegeben.

Die der Erfindung zugrundeliegende Aufgabe wird ferner durch die Verwendung des erfindungsgemäßen Pigmentes in Farben, Lacken, Druckfarben, Sicherheitsdruckfarben und Kosmetika gelöst.

Eine bevorzugte Weiterbildung ist in Unteranspruch 29 angegeben.

Die Aufgabe wird auch durch eine Beschichtungszusammensetzung gelöst, die ein erfindungsgemäßes Pigment gemäß einem der Ansprüche 1 bis 23 enthält.

Eine bevorzugte Weiterbildung ist im Unteranspruch 31 angegeben.

Die Aufgabe wird ferner durch einen Gegenstand gelöst, der mit einem erfindungsgemäßen Pigment gemäß einem der Ansprüche 1 bis 23 oder mit einer erfindungsgemäßen Beschichtungszusammensetzung gemäß einem der Ansprüche 30 oder 31 beschichtet ist.

Der Gegenstand kann bspw. ein beschichtetes Wand- oder Deckenmaterial, ein beschichtetes Baumaterial, wie bspw. Fassadenmaterial, etc. sein.

Die Erfinder haben überraschend festgestellt, dass es möglich ist, ein Pigment bereitzustellen, dass einen IR-reflektierenden Kern aufweist und dabei für das menschliche Auge im wesentlichen weiß erscheint.

Dabei war insbesondere überraschend, dass ein IR-reflektierender Kern, beispielsweise ein Substrat mit einer metallischen Oberfläche, die die IR-Strahlung äußerst effektiv reflektiert, so beschichtet werden kann, dass zum einen das IR-Reflexionsvermögen nicht wesentlich beeinträchtigt wird und dass zum anderen das Pigment für das menschliche Auge weitgehend weiß und nicht metallisch erscheint.

Das erfindungsgemäße Pigment kann mithin in weißen Applikationsmedien, wie beispielsweise Farben, Lacken oder Kosmetika, verwendet werden, ohne dass es dabei zu einer deutlich merklichen Vergrauung oder zu einem metallischen Glanz oder zu einem starken Glitzereffekt ("Sparkle") des Applikationsmedium kommt.

Somit eignet sich das erfindungsgemäße Pigment insbesondere zur Verwendung in weißen Dispersionsfarben, die üblicherweise zum Streichen von Rauminnenwänden verwendet werden. Selbstverständlich können solche Dispersionsfarben, die die erfindungsgemäßen Pigmente enthalten, auch in üblicher Weise durch Zugabe von weiteren Farbmitteln getönt werden.

Zur Herstellung des erfindungsgemäßen Pigmentes wird ein IR-reflektierender Kern mit im optischen Wellenlängenbereich deckenden und dabei weitgehend IR-transparenten pigmentartigen Partikel im wesentlichen gleichmäßig beschichtet. Unter einem Kern wird im Sinne der Erfindung ein partikuläres, vorzugsweise sphärisches oder plättchenförmiges, Substrat verstanden. Ganz besonders bevorzugt besitzt das Substrat eine plättchenförmige Form, da bei dieser geometrisch-morphologischen Form die größte IR-Reflexion bei gleichzeitig geringstem Materialverbrauch, d.h. einer geringeren Pigmentierungshöhe, gegeben ist.

Die Beschichtung besteht bevorzugt aus den wesentlichen IR-transparenten Pigmentpartikel (Weißpigmenten) einerseits und einem Matrixmaterial andererseits. Die im wesentlichen IR-transparenten Pigmentpartikel können auf der Oberfläche des IR-reflektierenden Kerns fixiert sein, indem diese beispielsweise in und/oder auf einer optisch transparenten Matrix ein- und/oder angelagert sind. Die Matrix umhüllt dabei den Kern vorzugsweise gleichmäßig. Diese vorzugsweise umhüllende Matrix schützt den Kern ferner vor dem korrosiven Einfluss von Wasser oder Atmosphärilien.

Unter einer im wesentlichen umhüllenden Beschichtung wird im Sinne der Erfindung verstanden, dass der IR-reflektierende Kern so von der Beschichtung umhüllt ist, dass der Kern bei einem Betrachter keinen wahrnehmbaren glänzenden Sinneseindruck hervorruft. Des weiteren ist der Grad der Umhüllung so weitgehend, dass bei einem korrosionsanfälligen metallischen IR-reflektierenden Kern das Auftreten von Korrosion unterdrückt oder vermieden wird.

Durch die gleichmäßige Beschichtung des IR-reflektierenden Kerns mit im optischen Wellenlängenbereich deckenden und dabei weitgehend IR-transparenten pigmentartigen Partikeln erhält das erfindungsgemäße Pigment insgesamt ein weitgehend weißes Aussehen. Der vom IR-reflektierenden Kern herrührende optische Effekt wird dabei weitgehend unterdrückt. Aufgrund der weitgehenden IR-Transparenz der pigmentartigen Partikel wird das IR-Reflexionsvermögen des Kerns überraschenderweise nicht wesentlich oder nicht beeinträchtigt.

Im Rahmen dieser Erfindung sind unter "optische Eigenschaften" oder "optischer Effekt" immer jene dem menschlichen Auge sichtbaren Eigenschaften der IR-Strahlung reflektierenden Pigmente gemeint. Diese Eigenschaften werden physikalisch im wesentlichen von den optischen Eigenschaften im Wellenlängenbereich von ca. 400 bis ca. 800 nm bestimmt.

Bei einer bevorzugten Variante handelt es sich bei den weißen optisch deckenden und IR-transparenten pigmentartigen Partikel um Weißpigmente mit einer mittleren Primärkorngröße von vorzugsweise 180 bis 400 nm, bevorzugt von 250 bis 350 nm weiter bevorzugt von 270 bis 330 nm. Derartige Pigmente besitzen gemäß der Mie'schen-Theorie für elektromagnetische Wellenlängen im optischen Bereich von 400 bis 800 nm den höchsten Streuquerschnitt. Sowohl kleinere wie auch größere Weißpigmente haben weit geringere Streueigenschaften. Am geringsten streuen beispielsweise Nanopartikel mit einer Primärkorngröße unterhalb von 30 bis 40 nm, die praktisch vollständig transparent sind. Dadurch, dass die Partikel vorzugsweise eine Partikelgröße mit dem höchsten Streuquerschnitt aufweisen, wird bewirkt, dass sie im wesentlichen weiß erscheinen und das optische Licht die Oberfläche des IR-reflektierenden Kernes fast nicht erreichen. Dadurch wird der optische Effekt des Kernes, beispielsweise der Metalleffekt im wesentlichen unterdrückt und das gesamte Pigment erscheint im wesentlichen weiß.

Die Weißpigmente können beispielsweise aus der Gruppe, die aus Titandioxid, Zinkoxid, Magnesiumoxid, Zinksulfid, Calciumfluorid, Lithiumfluorid, Natriumfluorid, Kaliumfluorid, Calciumcarbonat, Lithopone, Magnesiumcarbonat, Bariumsulfat, Bariumtitanat, Bariumferrit und deren Mischungen besteht, ausgewählt werden.

Das Weißpigment ist dabei im wesentlichen transparent, vorzugsweise transparent, für IR-Strahlen. In Abhängigkeit von dem verwendeten Weißpigment wird die Partikelgröße sowie die auf dem IR-reflektierenden Kern aufgebrachte Menge an Weißpigment eingestellt.

Bevorzugt verwendet man $TiO_2$ in der Rutil- oder Anatasmodifikation, Bariumsulfat, Zinkoxid und/oder Zinksulfid, wobei $TiO_2$ und ZnO aufgrund ihrer universellen Verfügbarkeit in allen Größen besonders bevorzugt sind. Als sehr geeignet hat sich $TiO_2$ in der Rutilform erwiesen.

Unter einer für IR-Strahlung im wesentlichen durchlässigen Beschichtung wird im Sinne der Erfindung verstanden, dass nur ein geringfügiger Anteil an IR-Strahlung von der Beschichtung und/oder den Weißpigmenten absorbiert wird. Zusammen mit den IR-reflektierenden Eigenschaften des Kernes führt dies zu einem hohen IR-Reflexionsgrad. Der IR-Reflexionsgrad $\rho_{IR}$ in Abhängigkeit von der Temperatur T lässt sich aus dem spektralen Reflexionsgrad $R(\lambda)$ durch Integration über alle Wellenlängen mit der Planck-Funktion $i(T)$ als Gewichtungsfunktion berechnen:

$$\rho_{IR}(T) = \frac{\int_{1,4}^{35} R(\lambda) * i(T) * d\lambda}{\int_{1,4}^{35} i(T) * d\lambda} \qquad (1)$$

Die Planck-Funktion $i(T)$ gibt an, wie viel ein schwarzer Körper bei einer gegebenen Temperatur T abstrahlen würde. Der relevante Spektralbereich für Raumtemperatur entspricht in guter Näherung dem Wellenlängenbereich von 1,4 bis 35 $\mu$m.

Vorzugsweise weisen erfindungsgemäße IR-Strahlung reflektierende Pigmente im Wellenlängenbereich von 2,5 bis 25 $\mu$m und einer gerechneten Temperatur von 300 K einen IR-Reflexionsgrad von mehr als 50 % auf. Weiter bevorzugt beträgt der IR-Reflexionsgrad wenigstens 60 % und noch weiter bevorzugt wenigstens 70 %. Sehr bevorzugt beträgt der IR-Reflexionsgrad wenigstens 80 %, und äußerst bevorzugt beträgt er wenigstens 85 % .

Das spektrale IR-Reflexionsvermögen der erfindungsgemäßen Pigmente kann durch eine diffuse Reflexionsmessung in einer KBr-Schüttung folgendermaßen bestimmt werden. Zunächst wird KBr-Pulver in einem Mörser zerkleinert. Anschließend wird das KBr-Pulver bis zu einer Konzentration von 1,5 Gew.-% mit Pigment versetzt und homogen miteinander vermengt. Eine tablettenförmige Probenkammer (Durchmesser: ca. 0,8 cm, Tiefe: ca. 2,2 mm) wird mit dem Pigment-KBr-Gemenge aufgefüllt und angedrückt. Anschließend vermisst man in einem Wellenlängenbereich von 2,5 bis 25 μm die diffuse Reflexion. Hierzu verwendet man als Meßeinheit Selector (Fa. Specac). Dieses Gerät misst die diffuse IR-Reflexion in einer Viertelkugelgeometrie. Als IR-Gerät wird ein Avatac 360 Spektrometer der Fa. Thermo verwendet, der Detektor ist ein DTGS-Detektor. Es wird stets als Backgroundspektrum ein reines KBr-Pulver vermessen und das Spektrum des pigmentierten KBr hiergegen abgeglichen. Der Vorgang wurde dreimal wiederholt und der Mittelwert der Messungen genommen.

Aus dem erhaltenen IR-Reflexionsspektrum lässt sich der IR-Reflexionsgrad $\rho_{IR}$ nach Formel (1) berechnen, wobei bei der Planck-Funktion eine Temperatur von 300 K einzusetzen ist.

Um die Absorption der im wesentlichen durchlässigen und im wesentlichen umhüllenden Beschichtung näher zu charakterisieren, kann der oben beschriebene IR-Reflexionsgrad eines erfindungsgemäßen beschichteten Pigmentes ins prozentuale Verhältnis gesetzt werden zu dem IR-Reflexionsgrad des unbeschichteten IR-reflektierenden Kernes (Konzentration 1,5 Gew.-%). Dieses Verhältnis wird im Rahmen dieser Erfindung als "IR-Reflexionsgrad Beschichtung" bezeichnet.

Das Verhältnis liegt bevorzugt über 65 %, besonders bevorzugt über 70 % und besonders bevorzugt über 80%. Weiter bevorzugt liegt dieses Verhältnis über 85 % und weiterhin bevorzugt über 90 %. Als Obergrenze liegt das Verhältnis bei 99 %.

Unter einer im wesentlichen oder weitgehend transparenten umhüllenden Beschichtung werden solche Beschichtungen verstanden, bei denen das erfindungsgemäße IR-Strahlung reflektierende Pigment die oben genannten Eigenschaften hinsichtlich seines IR-Reflexionsgrades aufweist. Die im wesentlichen oder weitgehend transparente umhüllende Beschichtung weist dabei vorzugsweise die das weiße Erscheinungsbild verbessernden oder hervorrufenden Weißpigmente auf.

Die verwendeten Weißpigmente können auch oberflächenbehandelt sein und z.B. mit Metalloxiden beschichtet sein. Insbesondere können $TiO_2$-Pigment Beschichtungen mit beispielsweise $SiO_2$, $Al_2O_3$ und/oder Mangan- und/oder Ceroxiden aufweisen, um die Photoaktivität der $TiO_2$-Pigmente zu unterdrücken. Vorteilhafterweise wird jedoch die Photoaktivität der $TiO_2$-Pigmente durch die umhüllende Matrix selbst, mit der die $TiO_2$- Pigmente auf der Oberfläche des IR-reflektierenden Kernes fixiert werden, unterdrückt.

Die Menge des verwendeten Weißpigmentes hängt ab von der Art und Größe des Pigmentes und vor allem von der spezifischen Oberfläche des IR-reflektierenden Kerns. Unter der spezifischen Oberfläche des IR-reflektierenden Kerns wird die Oberfläche des IR-reflektierenden Kerns pro Gewicht verstanden. Die spezifische Oberfläche des IR-reflektierenden Kerns wird mit der bekannten BET-Methode ermittelt.

Um einen genügend hohen Weißgrad der erfindungsgemäßen IR-reflektierenden Pigmente zu gewährleisten, weisen diese vorzugsweise Weißpigmente in einer Menge von 20 bis 80 Gew.-%, bevorzugt von 35 bis 70 Gew.-% und besonders bevorzugt von 40 bis 60 Gew.-%, jeweils bezogen auf das Gewicht des gesamten IR-reflektierenden Pigmentes, auf. Hierbei wird vorzugsweise eine Menge von etwa 20 Gew.-% bei IR-reflektierenden Kernen mit niedrigen spezifischen Oberflächen und eine Menge von etwa 80 Gew.-% bei IR-reflektierenden Kernen mit hohen spezifischen Oberflächen verwendet.

Bei Mengen von unter 20 Gew.-% an Weißpigmenten kann der Weißgrad der IR-reflektierenden Pigmente zu gering sein. Bei Mengen von mehr als 80 Gew.-% kann es zu einer zu geringen IR-Reflexion kommen, da der Anteil des IR-reflektierenden Kerns, bezogen auf das gesamte Pigment, zu gering sein kann. Um mit letzteren Pigmenten eine gute IR-Reflexion in beispielsweise einer Dispersionsfarbe zu erhalten, muss die Dispersionsfarbe entsprechend hoch pigmentiert werden. Eine hohe Pigmentierung d.h. ein hoher Gehalt von erfindungsgemäßem Pigment in dem Applikationsmedium, führt einerseits zu hohen Herstellungskosten. Andererseits kann es auch zu Überpigmentierungen und damit zu schlechten anwendungstechnischen Eigenschaften dieser Dispersionsfarben kommen.

Als IR-reflektierender Kern werden vorzugsweise Metallpulver und/oder plättchenförmige Metallpigmente und/ oder geeignete Perlglanzpigmente verwendet. Besonders bevorzugt sind hierbei plättchenförmige Metallpigmente, da sie aufgrund ihrer Formgebung und ihren optischen Eigenschaften bei vorzugsweise planparalleler Orientierung im Applikationsmedium die höchste IR-Reflexion aufweisen. Die Metallpigmente sind sowohl für das optische Licht als auch für IR-Strahlung opak. Auch auf nicht ebenen Untergründen, wie beispielsweise Raufasertapeten, bewirken plättchenförmige Metallpigmente die effektivste gerichtete und/oder diffuse Reflexion einfallender IR-Strahlung.

Als plättchenförmige Metallpigmente oder Metallpulver werden bevorzugt Aluminium, Kupfer, Zink, Titan, Eisen, Silber und/oder Legierungen dieser Metalle genommen. Besonders bevorzugt sind Aluminium und Legierungen des Aluminiums aufgrund von deren äußerst hohen IR-Reflexion und der leichten Verfügbarkeit dieser Metallpigmente. Die plättchenförmigen Metallpigmente werden erfindungsgemäß auch als Metalleffektpigmente bezeichnet.

Die Dimensionen der Länge und Breite der plättchenförmigen Pigmente, bevorzugt Metallpigmente oder Metalleffektpigmente, liegen vorzugsweise zwischen 3 und 200 $\mu$m, bevorzugt zwischen 12 und 90 $\mu$m, weiter bevorzugt zwischen 20 und 75 $\mu$m und besonders bevorzugt zwischen 40 und 70 $\mu$m.

Die mittlere Dicke der plättchenförmigen Pigmente, bevorzugt Metallpigmente oder Metalleffektpigmente, liegt vorzugsweise zwischen 0,04 und 4 $\mu$m, bevorzugt zwischen 0,1 und 3 $\mu$m und besonders bevorzugt zwischen 0,3 und 2 $\mu$m.

Die plättchenförmigen Pigmente, vorzugsweise Metalleffektpigmente, weisen vorzugsweise spezifische Oberflächen von ca. 0,2 bis ca. 15 m²/g auf. Metallpigmente oder Metalleffektpigmente mit einer Länge bzw. Breite unter 3 $\mu$m haben eine zu hohe Streuung im optischen Bereich und erscheinen daher auch nach Einfärbung mit einem Weißpigment zu grau. Zudem wird von Pigmenten dieser Größe die IR-Strahlung nicht mehr optimal reflektiert, da die Pigmente hier bereits kleiner als die Wellenlänge des zu reflektierenden IR-Lichtes sind. Außerdem lassen sich diese Metallpigmente oder Metalleffektpigmente aufgrund ihrer hohen spezifischen Oberfläche nicht mehr vollständig mit Weißpigmenten belegen oder die Weißpigmente entsprechend in eine Beschichtung einbinden. Oberhalb einer Länge bzw. einer Breite von 200 $\mu$m ist die durch die Pigmente erreichte Deckung hinsichtlich des IR-reflektierenden Metallanteils und damit die IR-Reflexion, beispielsweise in einer aufgetragenen Wandfarbe oder einem Lack, zu gering. Außerdem kann man Pigmente mit Größen von mehr als 200 $\mu$m trotz ihres weißen Aussehens schon mit dem Auge als Partikel wahrnehmen, was unerwünscht ist. Darüber hinaus kann es bei einer Pigmentgröße von mehr als 200 $\mu$m leicht zu Agglomeraten und damit zur Stippenbildung kommen.

Die plättchenförmigen Metallpigmente können in einer bereits passivierten Form vorliegen. Beispiele hierfür sind mit SiO$_2$ beschichtete Aluminiumpigmente (Hydrolan®, PCX oder PCS®, Fa. Eckart) oder chromatierte Aluminiumpigmente (Hydrolux®, Fa. Eckart). Bei Verwendung derart vorstabilisierter Substrate sind maximale Stabilitäten hinsichtlich der Gasungsstabilität in einer wässrigen Farbe, insbesondere Dispersionsfarbe wie eventuell auch der Korrosionsstabilitäten im Außenbereich gegeben.

Bei einer weiteren bevorzugten Ausführungsform besitzen die plättchenförmigen Pigmente, bevorzugt Metallpigmente, Längsdimensionen von 5 bis 12 $\mu$m. Derartige Pigmente werden vorwiegend als weiße, deckende Pigmente eingesetzt. Hier verwendet man relativ kleine Metallpigmente als Kern, um eine gute Deckung zu erzielen.

Bei einem weiteren bevorzugten Fall von plättchenförmigen Metallpigmenten und insbesondere von Aluminiumpigmenten als IR-reflektierender Kern werden pro 1 m² Oberfläche des IR-reflektierenden Metallkerns vorzugsweise 0,3 bis 10 g, bevorzugt 0,5 bis 7 g, weiter besonders bevorzugt 1 bis 3 g und besonders bevorzugt 1,5 bis 2,5 g des Weißpigmentes auf das vorzugsweise plättchenförmige Metallpigment aufgebracht.

Unterhalb von 0,3 g/m² Substratoberfläche kann die Belegung des vorzugsweise plättchenförmigen Metallpigmentes mit dem Weißpigment zu gering sein, um einen befriedigenden Weißeffekt zu geben. Oberhalb von 10 g/m² ist der Weißeffekt praktisch gesättigt und der Anteil des IR-reflektierenden Kerns am Gesamtpigment kann zu gering sein, so dass ein solches erfindungsgemäßes Pigment gegebenenfalls kein ausreichendes IR-Reflexionsvermögen mehr aufweist.

Weiterhin können als IR-reflektierende Kerne Metallpulver verwendet werden. Geeignete Pulver haben bevorzugt eine annähernd kugelförmige Gestalt mit einem mittleren Durchmesser von vorzugsweise 8 bis 1.000 $\mu$m, bevorzugt 10 bis 500 $\mu$m und besonders bevorzugt 20 bis 300 $\mu$m. Als IR-reflektierender Kern können aber auch irregulär geformte Metallpartikel verwendet werden.

Als IR-reflektierende Kerne können auch Perlglanzpigmente verwendet werden. Diese Perlglanzpigmente weisen vorzugsweise einen niedrig brechenden Kern wie Glimmer-, Glas-, SiO$_2$- oder Al$_2$O$_3$-Plättchen auf, welche mit hochbrechenden Oxiden wie TiO$_2$ und/oder Fe$_2$O$_3$ beschichtet sind. Beispiele für mit TiO$_2$ und/oder Fe$_2$O$_3$ beschichtete SiO$_2$-Plättchen sind unter dem Namen Colorstream® und Beispiele entsprechender Al$_2$O$_3$-Plättchen unter dem Namen Xirallic® bekannt und werden beide von der Fa. Merck, Darmstadt, Deutschland hergestellt. Bei geeigneten optischen Dicken der hochbrechenden Schicht findet aufgrund der Interferenzbedingungen eine weitgehende Reflexion der IR-Strahlung statt. Die geeigneten optischen Dicken werden in Abhängigkeit der Brechungsindizes des hochbrechenden Oxides eingestellt.

Die erfindungsgemäßen Pigmente besitzen vorzugsweise im IR-Bereich von 4 bis 25 $\mu$m, bevorzugt von 5 bis 15 $\mu$m und weiter bevorzugt von 8 bis 12 $\mu$m eine hohe Reflexion. Es hat sich gezeigt, dass ein optimales Wohlfühlklima im Rauminneren erzeugt wird, wenn in den vorgenannten Bereichen hohe Reflexionen, vorzugsweise gar Reflexionsmaxima vorliegen, da dann die erfindungsgemäßen Pigmente die IR-Strahlung des Menschen optimal reflektieren. Somit eignen sich die erfindungsgemäßen Pigmente insbesondere zur Verwendung für Wandfarben, die in Innenräumen aufgebracht werden.

Darüber hinaus müssen äußerst vorteilhaft Räume, deren Innenwände mit den erfindungsgemäßen Pigmenten versehen sind, im Winter aufgrund des IR-Reflexionsvermögens der erfindungsgemäßen Pigmente weniger stark beheizt werden. Somit ermöglichen es die erfindungsgemäßen Pigmente, Energie zu sparen, was insbesondere im Hinblick auf die knapper werdenden Energieressourcen und die stetig steigenden Energiekosten einen großen Fortschritt sowohl in ökologischer als auch in ökonomischer Hinsicht bedeutet.

Beispiele für als IR-reflektierende Kerne verwendbare Perlglanzpigmente sind die von der Firma Merck, Darmstadt, Deutschland, hergestellten und unter den Marken Solarflair® oder Minatec® vertriebenen Perlglanzpigmente.

Bei Verwendung von plättchenförmigen Kernen als IR-reflektierende Komponente in den erfindungsgemäßen Pigmenten wird eine optimierte IR-Reflexion im Verhältnis zur eingesetzten Menge des IR-reflektierenden Materials bewirkt. Bei plättchenförmigen Kernen sind zum einen die Deckungseigenschaften von Pigmenten, bevorzugt von Metallpigmenten, gegenüber beispielsweise kugelförmigen Pigmenten wie beispielsweise Metallgriess sehr viel besser. Zum anderen ist bei plättchenförmigen Pigmenten, bevorzugt Metallpigmenten, im Vergleich zu sphärischen Pigmenten das Reflexionsvermögen aufgrund der größeren Reflexionsfläche größer.

Es werden bevorzugt Effektpigmente als IR-reflektierende Kerne, beispielsweise Metalleffektpigmente oder Perlglanzpigmente, verwendet, da diese aufgrund ihrer Plättchenform im Hinblick auf Deckung und Reflexionsvermögen bei der vorliegenden Erfindung besonders geeignet sind.

Effektpigmente weisen üblicherweise ein vom Einfalls- und/oder Betrachtungswinkel abhängiges optisches Erscheinungsbild auf. Die optischen Effekte können Helligkeitsänderungen bei Metallpigmenten, die auch als "Flop" bezeichnet werden, und bei Perlglanzeffektpigmenten Farbänderungen, die auch als "Farbflops" bezeichnet werden, umfassen.

Typisch für Applikationsmedien, wie Farben oder Lacke, die Effektpigmente enthalten, sind deren hohen Glanzwerte. Metallpulver hingegen bewirken in Applikationsmedien wie Farben oder Lacken optisch immer eine starke Vergrauung, was mit niedrigen Helligkeiten einhergeht.

Diese üblicherweise bei Verwendung von Effektpigmenten, beispielsweise Perlglanz- oder Metalleffektpigmenten, oder Metallpulver auftretenden optischen Effekte sind bei den erfindungemäßen Pigmenten weitgehend unterdrückt. Die erfindungsgemäßen Pigmente weisen für das menschliche Auge ein weitgehend weißes Aussehen auf.

Es hat sich herausgestellt, dass bei Verwendung von Perlglanzpigmenten als IR-reflektierender Kern der gewünschte Weißgrad im Vergleich zu Metalleffektpigmenten relativ leicht zu erreichen ist. Die IR-Reflexion ist jedoch bei Metalleffektpigmenten weitaus höher. Daher sind Metalleffektpigmente als IR-reflektierender Kern bei den erfindungsgemäßen Pigmenten bevorzugt, auch wenn eine größere Menge an IR-transparenten Weißpigmenten auf die Metallpigmente aufzubringen ist. Plättchenförmige Aluminiumpigmente sind dabei besonders bevorzugt.

Ein erfindungsgemäßes, weitgehend weißes IR-reflektierendes Pigment, welches keinen für das menschliche Auge merklichen Metalleffekt oder einen von der Farbe weiß verschiedenen Farbeffekt aufweist, erfüllt vorzugsweise folgende Kriterien:

Die Parameter Glanz, Chroma C*, Flopindex und die Helligkeit L*, jeweils gemessen bei einem konstanten Einfallswinkel von 45°, liegen bei dem erfindungsgemäßen Pigment, bevorzugt Metalleffektpigment, vorzugsweise innerhalb bestimmter Wertebereiche. Auch der bei Effektpigmenten häufig auftretende Glitzereffekt wird weitgehend unterdrückt. Dieser Glitzereffekt ist allerdings farbmetrisch nicht messbar und daher nur visuell zu beurteilen.

Um diese Parameter vergleichsweise ermitteln zu können, wird folgendermaßen vorgegangen: zum einen werden die erfindungsgemäßen Pigmente in einen ansonsten unpigmentierten konventionellen Lack auf Basis eines Polyester / CAB-Systems (Bindemittel: 22 Gew.-% CAB 381-2 und 9 Gew.-% CAB 551-0.2 , beide FA. Eastman und 13 Gew.-% Viacryl SC 303, Fa. SurfaceSpecialities) eingearbeitet. Diesem Lack, im folgenden "Prüflack" genannt, werden keine weiteren Pigmente oder Mattierungsmittel zugesetzt, da diese die zu bestimmenden Parameter, insbesondere Glanz und Chroma, beeinflussen würden. Als Pigmentierungshöhe werden 10 Gew.-% gewählt, und der Pigment-haltige Lack wird auf einem schwarzen Untergrund aufgerakelt. Die Rakeltiefe beträgt 50 $\mu$m und bei sehr groben Pigmenten 100 $\mu$m.

Von diesen Rakelabzügen werden das Chroma, Helligkeitswerte und der Flopwert im Rahmen des CieLab-Farbsystems ermittelt. Man misst mit einem Mehrwinkelfarbmessgerät, beispielsweise M 682 der Firma X-Rite, gemäß Herstellerangaben bei einem konstanten Einfallswinkel von 45° bei verschiedenen Beobachtungswinkeln relativ zum Glanzwinkel und bestimmt die L*- und C*-Werte. Insbesondere sind die Beobachtungswinkel bei 15°, 25°, 45° und 110° relevant.

Bei der Bewertung der Farbsättigung, dem so genannten Chroma, ist der Wert $C^*_{25°}$ heranzuziehen.

Der $C^*_{25°}$-Wert der Rakelabzüge der erfindungsgemäßen Pigmente liegt vorzugsweise in einem Bereich von 0,0 bis 2,5, bevorzugt von 0,1 bis 1,0. Derartige Werte erreichen nur praktisch farblose Pigmente.

Da im Prinzip auch bestimmte unbunte Metallpigmente sowie silberne Perlglanzpigmente derartige $C^*_{25°}$-Werte erreichen können, werden vorzugsweise weitere Maßzahlen zu Charakterisierung der erfindungsgemäßen Pigmente herangezogen.

Zur Beurteilung der Helligkeit L* wird hier der Wert bei 45° herangezogen. Effektpigmente werden hinsichtlich ihrer Helligkeit häufig durch Werte nahe dem Glanzwinkel, d.h. bei 15° oder 20° charakterisiert. Die erfindungsgemäßen Pigmente zeigen eine weitgehend winkelunabhängige Helligkeit, d.h. weisen keinen signifikanten Helligkeitsflop auf. Eine bessere Differenzierung gegenüber reinen Metallpigmenten oder Metallpulver gelingt daher bei mittleren Werten.

Die $L^*_{45°}$-Werte der erfindungsgemäßen Pigmente liegen vorzugsweise bei 50 bis 90 Einheiten, bevorzugt bei 55 bis 80 Einheiten und besonders bevorzugt bei 60 bis 75 Einheiten.

Der Helligkeitsflop ist dabei von DuPont nach folgender Formel festgelegt (A.B.J. Rodriguez, JOCCA, (1992(4)) S. 150 - 153):

$$Flopindex = 2{,}69 \times \frac{(L^{\bullet}_{15^{\circ}} - L^{\bullet}_{110^{\circ}})^{1{,}11}}{(L^{\bullet}_{45^{\circ}})^{0{,}86}} \qquad (2)$$

Der Flopindex gibt den charakteristischen Helligkeitsflop insbesondere von Metalleffektpigmenten wieder und gilt weniger bei Perlglanzpigmenten oder Metallpulver.

Die erfindungsgemäßen Pigmente besitzen einen Helligkeitsflop von 0 bis 3, bevorzugt von 0,1 bis 2 und besonders bevorzugt von 0, 15 bis 1,0.

Diese äußerst geringen Werte zeigen, dass beispielsweise bei Metalleffektpigmenten der sonst so typische Helligkeitsflop mit einem Flopindex in einem Bereich von ca. 4 bis ca. 25 bei den erfindungsgemäßen Pigmenten vollständig oder weitgehend unterdrückt ist.

Ein Charakteristikum insbesondere von Effektpigmenten ist der hohe Glanz der Farb- oder Lackbeschichtung, die die Effektpigmente enthalten. Da die erfindungsgemäßen Pigmente diese charakteristischen optischen Glanzeigenschaften der Effektpigmente nicht mehr zeigen, besitzen die Lackabzüge sehr geringe Glanzwerte.

Als Kriterium wird hier der Glanz bei 60°, der mit einem Trigloss-Gerät der Fa. Byk-Gardner, Deutschland gemäß Herstellerangaben gemessen wurde, herangezogen. Die erfindungsgemäßen Pigmente besitzen einen Glanz von 1 bis 12, bevorzugt von 1,5 bis 10 Einheiten. Üblicherweise liegt der Glanz bei Effektpigmenten in einem Bereich von ca. 30 bis 160.

Ein weiteres Kriterium für das weitgehend weiße Erscheinungsbild des erfindungsgemäßen Pigmentes läßt sich anhand von dessen Erscheinungsbild in einer kommerziell erhältlichen weißen Dispersionsfarbe ermitteln. Hierbei wird ein Vergleich zwischen den erfindungsgemäßen Pigmenten und den unbeschichteten und/oder ohne Weißpigment beschichteten IR-reflektierenden Pigmenten vorgenommen. Man mißt man die Helligkeit entsprechend pigmentierter Dispersionsfarben in diffuser Reflexion. Die Pigmentierungshöhe des IR-reflektierten Kernes beträgt hierbei 10 Gew.-% bezogen auf die gesamte Dispersionsfarbe. Anschließend wird die Differenz der entsprechenden Helligkeiten gebildet:

$$\Delta L^{*} \text{ diffus} = L^{*}_{\text{diffus, Weißpigment}} - L^{*}_{\text{diffus, ohne Weißpigment}}.$$

Diese Differenz soll bevorzugt größer als 1,5 Einheiten, bevorzugt größer als 3 Einheiten und besonders bevorzugt größer als 7 Einheiten sein.

Diese Helligkeitsdifferenz ist jedoch nicht allein zur Beurteilung des Weißgrades heranzuziehen. So bewirken Metallpigmente stets eine starke Erhöhung der Helligkeit, ohne deswegen weiß zu sein. Daher ist hier letztlich immer noch der visuelle Eindruck entscheidend.

Die für IR-Strahlung im wesentlichen durchlässige Beschichtung, welche sowohl den Kern als auch die Weißpigmente weitgehend umhüllt, stellt eine optisch weitgehend farblose Matrix dar. Sie umfasst oder besteht vorzugsweise aus Metalloxiden und/oder organischen Polymeren. Die Weißpigmente können auch auf der umhüllenden Beschichtung oder Matrix aufgebracht sein. Die Matrix ist vorzugsweise weitgehend farblos, um den durch die auf- oder eingebrachten Weißpigmente erzeugten Weißeffekt nicht zu beeinträchtigen.

Unter weitgehend farblos wird erfindungsgemäß verstanden, dass die Metalloxide und/oder organischen Polymere keine wesentliche Eigenfärbung aufweisen, die nicht von dem durch die Weißpigmente erzeugten Weißeffekt überdeckt werden kann.

Wenn der Kern aus einem Metallpigment besteht, so ist das weitgehend farblose Matrixmaterial bevorzugt ein Metalloxid, da auf diese Weise der Kern sehr gut vor Korrosion geschützt werden kann. Das für das Matrixmaterial zu verwendende Metalloxid sowie die Menge desselben werden insbesondere unter dem Gesichtspunkt ausgewählt, dass das erfindungsgemäße Pigment möglichst wenig IR-Strahlung absorbiert. Jegliche IR-Absorption der erfindungsgemäßen Pigmente führt zu einer verminderten IR-Reflexion und schwächt damit die gewünschte Wirkung der erfindungsgemäßen Pigmente. Das Matrixmaterial bewirkt eine Haftung der Weißpigmente auf dem IR-reflektierenden Kern, so dass die Weißpigmente auch nach der Dispergierung in die Dispersionsfarbe weitgehend auf den IR-reflektierenden Kern haften bleiben. Erst diese zuverlässige Anbindung ermöglicht die Unterdrückung der Effektpigment-typischen optischen Erscheinungen und ermöglicht das weitgehend weiße Aussehen.

Beispiele für sehr geeignete Metalloxide sind Titandioxid, Siliciumdioxid, Aluminiumoxid/-hydroxid, Boroxid/-hydroxid, Zirkonoxid oder deren Mischungen. Besonders bevorzugt ist Siliciumdioxid.

Als organische Polymere werden bevorzugt diejenigen verwendet, die auch als Bindemittel in Lacken, Dispersionsfarben oder Druckfarben eingesetzt werden. Beispiele hierfür sind Polyurethane, Polyester, Polyacrylate und/oder Polymethacrylate. Es hat sich gezeigt, dass sich die erfindungsgemäßen Effektpigmente sehr gut in Bindemittel einarbeiten lassen, wenn die organische Beschichtung und das Bindemittel sehr ähnlich zueinander oder identisch sind.

Die optisch weitgehend farblose Matrix ist vorzugsweise in einem Anteil von 4 bis 40 Gew.-%, bezogen auf das Gewicht des gesamten Pigments vorhanden. Bevorzugt beträgt der Anteil 5 bis 20 Gew.-% und besonders bevorzugt 6 bis 15 Gew.-%. Überraschenderweise können bei derart geringen Mengen an Matrixmaterial sowohl die Weißpigmente fest und gleichmäßig auf der Oberfläche der Kerne verankert als auch bei metallischen Kernen eine Korrosionsstabilität dieser Kerne erreicht werden. Bei einem Anteil unter 4 Gew.-% kann es sein, dass die Pigmente nicht fest genug auf der Oberfläche des IR-reflektierenden Kerns verankert sind. Zudem kann es sein, dass bei metallischen Kernen die erforderliche Korrosionsstabilität, die eine möglichst vollständige Umhüllung der Kerne mit der Matrix erfordert, bei diesen geringen Mengen nicht ausreichend gegeben ist. Bei Mengen über 40-Gew-% kann es sein, dass sowohl die IR-Reflexion als auch der Weißgrad der Pigmente zu niedrig ist. Ferner kann es sein, dass die IR-Absorption durch das Matrixmaterial in ungünstiger Weise zunimmt.

Bei einer besonders bevorzugten Ausführungsform bestehen der IR-reflektierende Kern aus Aluminium und die optisch weitgehend farblose Matrix aus $SiO_2$. Ferner ist bevorzugt, dass das Weißpigment $TiO_2$ ZnS und/oder ZnO ist, welche vorzugsweise eine mittlere Primärkorngröße von 250 bis 370 nm und besonders bevorzugt von 250 bis 320 nm aufweisen.

Aluminium besitzt die höchste IR-Reflexion und ist kommerziell sehr gut verfügbar. $SiO_2$ eignet sich hervorragend zur Korrosionsstabilisierung des Aluminiums, und $TiO_2$ ist aufgrund seines hohen Brechungsindexes ein sehr gutes Weißpigment und ebenfalls kommerziell sehr gut verfügbar. Ferner hat sich überraschend gezeigt, dass ZnS-Partikel oder ZnO-Partikel, insbesondere mit einer Primärkorngröße im Bereich von 250 bis bis 370 nm und besonders bevorzugt von 250 bis 320 nm, die IR-Strahlung kaum absorbieren und mithin bei der vorliegenden Erfindung besonders gut geeignet sind.

Gemäß einer weiteren bevorzugten Ausführungsform weisen die erfindungsgemäßen Pigmente eine organische Oberflächenmodifizierung auf. Die erfindungsgemäßen Pigmente sind vorzugsweise mit leafing-fördernden Agenzien modifiziert. Die leafing-fördernden Agenzien bewirken ein Aufschwimmen der erfindungsgemäßen Pigmente an der Oberfläche des Applikationsmediums, bspw. einer Farbe, bevorzugt einer Dispersionsfarbe, eines Lackes oder eines Kosmetikums. Dadurch, dass sich die erfindungsgemäßen Pigmente an der Oberfläche des Applikationsmediums anordnen, wird das IR-Reflexionsvermögen im applizierten Zustand verbessert, da die IR-Strahlung bereits an der Oberfläche des Applikationsmediums reflektiert wird und nicht erst in das Applikationsmedium eindringen muss, wodurch es zu Absorptionsverlusten kommen kann.

Vorzugsweise werden die erfindungsgemäßen Pigmente mit langkettigen gesättigten Fettsäuren wie beispielsweise Stearinsäure, oder Palmitinsäure oder langkettigen Alkylsilanen mit 8 bis 30 C-Atomen, vorzugsweise 12 bis 24 C-Atomen oder mit langkettigen Phosphorsäuren oder Phosphonsäuren oder deren Ester und/oder langkettigen Aminen oberflächenmodifiziert.

Bei einer weiteren erfindungsgemäßen Ausgestaltung bestehen die pigmentartigen Partikel nicht aus individuellen, kommerziell erhältlichen Weißpigmenten, sondern aus partikelartigen Auswüchsen eines Beschichtungsmaterials mit einem Brechungsindex > 2,0. Die Beschichtung kann hierbei zunächst aus einer glatten Schicht dieses hochbrechenden Materials bestehen, welche dann von seiner Morphologie auf der dem IR-reflektierenden Kern abgewandten Seite der Beschichtung jedoch zunehmend eine partikuläre Form annimmt. Derartige Formen können sich beispielsweise in einer Art "Blumenkohlstruktur" darstellen, wenn man die Pigmente mittels rasterelektronischen Methoden untersucht. Bevorzugt sind hierbei Schichten und partikelartige Beschichtungsauswüchse aus $TiO_2$.

Die erfindungsgemäßen Pigmente können hergestellt werden, indem auf einen IR-reflektierenden Kern eine für IR-Strahlung im wesentlichen durchlässige Beschichtung zusammen mit Weißpigmenten und/oder sichtbares Licht streuende partikelartige Beschichtungsauswüchse aufgebracht wird.

Die Beschichtung umhüllt dabei vorzugsweise den IR-reflektierenden Kern im wesentlichen vollständig, weiter bevorzugt vollständig. Die für IR-Strahlung im wesentlichen durchlässigen Weißpigmente und/oder sichtbares Licht streuende partikelartige Beschichtungsauswüchse werden dabei in und/oder auf der Beschichtung aufgebracht.

Zur Vermeidung von Wiederholungen wird in Bezug auf das gemäß den erfindungsgemäßen Verfahren hergestellte erfindungsgemäße Pigment auf die obigen Erläuterungen verwiesen, die entsprechend für das erfindungsgemäße Verfahren gelten.

Bei einer bevorzugten Verfahrensvariante werden die für IR-Strahlung im wesentlichen durchlässigen Weißpigmente zusammen mit Metalloxid unter Verwendung naßchemischer Sol-Gel-Verfahren um den Kern umhüllend aufgefällt, so dass die Weißpigmente in der Metallcxidschicht im wesentlichen eingebettet sind.

Ein bevorzugte Verfahrensvariante umfaßt die folgenden Schritte:

a) Dispergieren des plättchenförmigen IR-reflektierenden Pigmentkerns in einem Lösemittel, vorzugsweise in einem organischen Lösemittel,

b) Zugabe von Wasser, einer Metallalkoxyverbindung und ggfs. Katalysator, wobei optional erwärmt wird, um die Reaktion zu beschleunigen,

c) Zugabe des IR-transparenten Weißpigmentes, vorzugsweise als Dispersion in einem Lösemittel, bevorzugt in organischem Lösemittel.

Nach Reaktionsende kann das erfindungsgemäße Pigment, d.h. der mit Weißpigmenten und Metalloxid beschichtete plättchenförmige IR-reflektierende Kern, von nicht umgesetzten Edukten und vom Lösemittel abgetrennt werden. Danach kann eine Trocknung sowie optional eine Größenklassierung erfolgen.

Als Metallalkoxyverbindung werden bevorzugt Tetraalkoxysilane wie Tetramethoxysilan oder Tetraethoxysilan verwendet, um eine $SiO_2$-Schicht mit vorzugsweise darin eingebetteten Weißpigmenten auf und vorzugsweise den Kern umhüllend zu fällen.

Als organische Lösemittel werden bevorzugt wassermischbare Lösemittel verwendet. Besonders bevorzugt verwendet man Alkohole wie z.B. Methanol, Ethanol, n-Propanol, i-Propanol, n-Butanol, i-Butanol oder t-Butanol.

Die Menge an Wasser sollte bevorzugt zwischen dem 1,5-fachen und 30-fachen der für die Sol-Gel-Reaktion stöchiometrisch benötigten Menge liegen. Bevorzugt liegt die Menge an Wasser zwischen dem 2-fachen und 10-fachen der stöchiometrisch benötigten Menge.

Unterhalb der 1,5-fachen stöchiometrisch benötigten Menge ist die Reaktionsgeschwindigkeit des Sol-Gel-Prozesses zu langsam und oberhalb der 30-fachen stöchiometrisch benötigten Menge kann die Schichtbildung nicht gleichmäßig genug sein.

Die Reaktionstemperatur während der Sol-Gel-Reaktion liegt vorzugsweise zwischen 40°C und der Siedetemperatur des verwendeten Lösemittels.

Als Katalysatoren können bei der Sol-Gel-Reaktion schwache Säuren oder Base verwendet werden.

Als Säuren werden bevorzugt organische Säuren wie beispielsweise Essigsäure, Oxalsäure, Ameisensäure, etc. verwendet.

Als Basen werden bevorzugt Amine verwendet. Beispiele hierfür sind: Ammoniak, Hydrazin, Methylamin, Ethylamin, Triethanolamin, Dimethylamin, Diethylamin, Methylethylamin, Trimethylamin, Triethylamin, Ethylendiamin, Trimethylendiamin, Tetramethylendiamin, 1-Propylamin, 2-Propylamin, 1-Butylamin, 2- Butylamin, 1-Propylmethylamin, 2-Propylmethylamin, 1-Butylmethylamin, 2-Butylmethylamin, 1-Propylethylamin, 2-Propylethylamin, 1-Butylethylamin, 2-Butylethylamin, Piperazin und/oder Pyridin.

Die Weißpigmente können, bevorzugt vor der Zugabe zur Beschichtungssuspension, mechanisch zerkleinert werden, um möglichst viele Primärpartikel vorliegen zu haben. Dies kann in üblicherweise in einem organischen Lösemittel, ggfs unter Zugabe geeigneter Dispergieradditive und/oder Bindemittel geschehen. Die Zerkleinerung kann in den üblichen Aggregaten erfolgen, wie beispielsweise Dreiwalzenstuhl, Co-Ball-Mill, Zahnraddispergiermühle etc..

Bei einer weiteren Ausführungsform des erfindungsgemäßen Verfahrens werden die erfindungsgemäßen Pigmente durch ein Sprühtrocknungsverfahren hergestellt.

Bei dieser Verfahrensvariante wird eine Dispersion umfassend ein leicht flüchtiges, vorzugsweise organisches, Lösemittel, IR-reflektierende Kerne, IR-transparente Weißpigmente mit einer mittleren Größen von vorzugsweise 180 bis 400 nm und einem organischen, vorzugsweise filmbildenden, Bindemittel zusammen versprüht und während des Sprühens getrocknet. Vorzugsweise wird die Sprühtrocknung in einer bewegten Atmosphäre, beispielsweise einer Wirbelschicht, durchgeführt, um Agglomerationen zu vermeiden. Während des Sprühtrocknens werden die Kerne gleichmäßig mit dem organischen, vorzugsweise filmbildenden, Bindemittel und den Weißpigmenten beschichtet. Nach der Trocknung kann das organische, vorzugsweise filmbildende, Bindemittel ausgehärtet werden. Dies kann bevorzugt ebenfalls in der Sprühtrocknungsapparatur geschehen, indem beispielsweise die Temperatur des Speisegases oberhalb der Aushärtungstemperatur des Bindemittels liegt.

Bei einer weiteren Ausführungsform des erfindungsgemäßen Verfahrens kann das erfindungsgemäße IR-Strahlung reflektierende, vorzugsweise plättchenförmige, Pigment durch Beschichtung der IR-reflektierenden Kerne mit einer Matrix aus geeigneten Ausgangsverbindungen und Weißpigmenten in einem Wirbelschichtverfahren erhalten werden.

Die erfindungsgemäßen, IR-Strahlung reflektierenden, vorzugsweise plättchenförmigen, Pigmente werden bevorzugt in Farben, Lacken, Druckfarben, Sicherheitsdruckfarben und Kosmetika verwendet.

Bevorzugt werden die erfindungsgemäßen, IR-Strahlung reflektierenden, vorzugsweise plättchenförmigen, Pigmente in Dispersionsfarben für den Innen- oder Außenbereich verwendet.

Mit den erfindungsgemäßen Pigmenten pigmentierte Applikationsmedien, beispielsweise Dispersionsfarben, besitzen ein weitgehend weißes Aussehen. Der Weißgrad dieser Applikationsmedien kann gegebenenfalls durch weitere Zugabe von Weißpigmenten wie $TiO_2$ oder auch von Füllstoffen weiter erhöht werden. Außerdem können durch Abtönen mit Farbmitteln wie organischen oder anorganischen Farbpigmenten farbige Dispersionsfarben hergestellt werden. Um einen möglichst hohen IR-Emissionsgrad einer beispielsweise mit einer Dispersionsfarbe bestrichenen Wand zu erreichen, ist es bevorzugt, dass die Dispersionsfarbe die erfindungsgemäßen Pigmente in einer solchen Menge enthält, so dass der Anteil der IR-reflektierenden Kerne, bezogen auf das Gewicht aller nichtflüchtigen Komponenten der Dispersionsfarbe, bei 2 bis 30 Gew.-%, bevorzugt bei 4 bis 20 Gew.-% und besonders bevorzugt bei 7 bis 15 Gew.-% liegt.

Mit mit den erfindungsgemäßen Pigmenten pigmentierten Dispersionsfarben sind Anstriche möglich, die IR-Emissionsgrade von unter 0,5, bevorzugt unter 0,4 und besonders bevorzugt unter 0,3 besitzen. Die Untergrenze der Emission hierbei liegt bei ca. 0,2.

Der IR-Emissionsgrad ist dabei definiert als:

$$\text{Emissionsgrad} = 1 - \text{Reflexionsgrad} \qquad (3)$$

Zum Vergleich hierzu besitzt eine konventionell gestrichene Wandfarbe einen Emissionsgrad von ca. 0,9, d.h. nur etwa 10% der IR-Strahlung werden reflektiert und 90 % der IR-Strahlung werden von der Wandfarbe aufgenommen bzw. durchgelassen und gehen letztendlich als Wärme verloren.

Um möglichst niedrige Emissionsgrade bzw. hohe Reflexionsgrade realisieren zu können, ist es bevorzugt, dass die weiteren Komponenten der Dispersionsfarbe wie beispielsweise Bindemittel oder Füllstoffe ebenfalls eine möglichst niedrige IR-Absorption aufweisen. Auch können die Pigmentierungshöhen der Bindemittel, Füllstoffe und/oder Weißpigmente aufgrund der zusätzlichen Pigmentierung durch die erfindungsgemäßen Pigmente deutlich niedriger, als dies im Stand der Technik üblich ist, ausfallen.

Die erfindungsgemäßen, IR-Strahlung reflektierenden, vorzugsweise plättchenförmigen, Pigmente werden in weiteren Ausführungsformen bevorzugt als sehr gut deckendes, weißes Pigment in Lacken, bevorzugt in farbigen Lacken und ganz besonders bevorzugt in farbigen Industrielacken verwendet.

Bei dieser Verwendung wird als Kern bevorzugt ein plättchenförmiges Aluminiumpigment mit einer mittleren Größe von 5 bis 12 $\mu$m, als Weißpigment bevorzugt $TiO_2$, ZnS und/oder ZnO mit einem bevorzugten Durchmesser von 250 bis 320 nm und als Matrix bevorzugt $SiO_2$ verwendet. Bei der Anwendung im Industrielack steht neben den IR-reflektierenden Eigenschaften des Pigmentes insbesondere auch die hervorragende Deckung des plättchenförmigen Aluminiumkernes im optischen Bereich im Vordergrund.

Farbige Industrielacke sind oft mit großen Mengen teurer Farbpigmente pigmentiert und besitzen aufgrund der Transparenz dieser Pigmente jedoch eine zu geringe Deckung. Eine Zugabe von Weißpigmenten wie $TiO_2$ verbessert zwar die Deckung, führt aber unweigerlich zu einem helleren Farbton. Setzt man einem Industrielack die erfindungsgemäßen Pigmente zu, so kann man vorteilhafterweise bereits bei sehr geringen Pigmentierungen, d.h. bei geringen Zugabemengen, die Deckung deutlich verbessern, ohne eine wesentliche Aufhellung des Lackes in Kauf nehmen zu müssen. So werden die erfindungsgemäßen Pigmente bei Anwendungen im Lack oder Industrielack in Pigmentierungshöhen von 0,1 bis 4 Gew.-%, bevorzugt von 0, 2 bis 1,5 Gew.-% und besonders bevorzugt von 0,3 bis 1,0 Gew.-%, jeweils bezogen auf das Gewicht der gesamten Formulierung, verwendet.

Die folgenden Beispiele dienen der Erläuterung der Erfindung ohne sie in irgend einer Weise zu beschränken.

## Beispiele

## Erfindungsgemäßes Beispiel 1:

100 g Aluminiumpulver (Reflexal 145, $d_{50}$=145 $\mu$m) werden in 250 ml Isopropanol unter Rühren dispergiert und das Lösemittel unter Rückfluß zum Sieden gebracht. Anschließend gibt man 17 g Tetraethoxysilan und 2 min später 1,7 g Ethylendiamin in 50 g vollentsalztes Wasser hinzu. In einem separaten Gefäß werden 200 g $TiO_2$-Pigment (Kronos 2310, mittlere Primärpartikelgröße: 300 nm; Fa. Kronos Titan, Friedrichstadt, Deutschland) in 50 g Tetraethoxysilan unter Rühren dispergiert. Diese Dispersion wird nach einer Stunde Reaktionszeit innerhalb einer Stunde der Aluminiumpigmentsuspension kontinuierlich zugegeben. Eine halbe Stunde später setzt man 1 g Ethylendiamin gelöst in 20 g Isopropanol hinzu. Eine Stunde später werden 2,5 g Ethylendiamin gelöst in 20 g Isopropanol hinzugegeben. Man lässt das Reaktionsgemisch weitere 4 h lang kochen und kühlt dann auf Raumtemperatur ab. Am nächsten Tag wird das mit $SiO_2$ und dem Weißpigment beschichtete Aluminiumpigment über einen Büchnertrichter abfiltriert, mehrmals mit Isopropanol gewaschen und im Trockenschrank bei 80 °C unter reduziertem Druck getrocknet.

## Erfindungsgemäßes Beispiel 2:

141 g Aluminiumpaste (Stapa Metalux 274, $d_{50}$ = 33 $\mu$m) werden in 250 ml Isopropanol unter Rühren dispergiert und das Lösemittel unter Rückfluß zum Sieden gebracht. Anschließend gibt man 17 g Tetraethoxysilan und 2 min später 1,7 g Ethylendiamin (EDA) in 50 g vollentsalztes Wasser hinzu. In einem separaten Gefäß werden 100 g $TiO_2$-Pigment (Kronos 2310) in 50 g Tetraethoxysilan unter Rühren dispergiert. Diese Dispersion wird nach einer Stunde Reaktionszeit innerhalb einer Stunde der Aluminiumpigmentsuspension kontinuierlich zugegeben. Eine halbe Stunde später setzt man 1 g Ethylendiamin gelöst in 20 g Isopropanol hinzu. Eine Stunde später werden 2,5 g EDA gelöst in 20 g Isopropanol hinzugegeben. Man lässt das Reaktionsgemisch weitere 4 h lang kochen und kühlt dann auf Raumtemperatur ab. Am nächsten Tag wird das mit $SiO_2$ und dem Weißpigment beschichtete Aluminiumpigment über einen Büchnertrichter abfiltriert, mehrmals mit Isopropanol gewaschen und im Trockenschrank bei 80 °C unter reduziertem Druck getrocknet.

**Vergleichsbeispiel 3:**

Kommerziell erhältliches Aluminiumpulver Reflexal 145, $d_{50}$=145 $\mu$m (Fa. ECKART GmbH&Co.KG). Ausgangsmaterial f. erfindungsgemäßes Beispiel 1.

**Vergleichsbeispiel 4:**

Kommerziell erhältliche Aluminiumpaste Stapa Metalux 274, $d_{50}$=33 $\mu$m (Fa. ECKART GmbH&Co.KG). Ausgangsmaterial f. erfindungsgemäßes Beispiel 2.

**Vergleichsbeispiel 5:**

Kommerziell erhältliches Aluminiumpulver PCS 3500 (Fa. Eckart). Hierbei handelt es sich um ein mit $SiO_2$ beschichtetes Aluminiumpigment mit sehr ähnlichem Kornband wie MEX 274 des Vergleichsbeispiels 4.

**Erfindungsgemäßes Beispiel 6:**

141 g Aluminiumpaste (Stapa Metalux 274, $d_{50}$= 33 $\mu$m) werden in 250 ml Isopropanol unter Rühren dispergiert und das Lösemittel unter Rückfluß zum Sieden gebracht. Anschließend gibt man 17 g Tetraethoxysilan und 2 min später 1,7 g Ethylendiamin (EDA) in 50 g vollentsalztes Wasser hinzu. In einem separaten Gefäß werden 100 g ZnS-Pigment (Sachtolith L; Fa. Sachtleben; mittlere Teilchengröße: 0,35 $\mu$m) in 50 g Tetraethoxysilan unter Rühren dispergiert. Diese Dispersion wird nach einer Stunde Reaktionszeit innerhalb einer Stunde der Aluminiumpigmentsuspension kontinuierlich zugegeben. Eine halbe Stunde später setzt man 1 g Ethylendiamin gelöst in 20 g Isopropanol hinzu. Eine Stunde später werden 2,5 g EDA gelöst in 20 g Isopropanol hinzugegeben. Man lässt das Reaktionsgemisch weitere'4 h lang kochen und kühlt dann auf Raumtemperatur ab. Am nächsten Tag wird das mit $SiO_2$ und dem Weißpigment beschichtete Aluminiumpigment über einen Büchnertrichter abfiltriert, mehrmals mit Isopropanol gewaschen und im Trockenschrank bei 80 °C unter reduziertem Druck getrocknet.

**Erfindungsgemäßes Beispiel 7:**

1 Teil Standart[®] Reflexal 214 (Fa. ECKART GmbH&Co.KG) wird in 4 Teilen Aceton eingerührt, anschließend wird 1 Teil eines gemahlenen Substanzpolymerisats auf Basis Methylmethacrylat (Degalan M 527; Degussa) sowie 1 Teil Kronos 2310 zugegeben und solange gerührt, bis das Polymerisat vollständig gelöst ist.
Die so gewonnene Suspension wird über ein Sprühtrocknungsgerät bei Temperaturen oberhalb 60°C versprüht.
Das so erhaltene Pigment liegt als weißes, nicht glänzendes Pulver vor.

**Erfindungsgemäßes Beispiel 8:**

1 Teil Standärt[®] Reflexal 214 (Fa. ECKART GmbH&Co.KG) wird in 4 Teilen Aceton eingerührt, anschließend wird 1 Teil eines gemahlenen Substanzpolymerisats auf Basis Methylmethacrylat sowie 1 Teil ZnS (Sachtolith L; Sachtleben; mittlere Teilchengröße: 0,35$\mu$m) als Weißpigment zugegeben und solange gerührt, bis das Polymerisat vollständig gelöst ist.
Die so gewonnene Suspension wird über ein Sprühtrocknungsgerät bei Temperaturen oberhalb 60°C versprüht.
Das so erhaltene Pigment liegt als weißes, nicht glänzendes Pulver vor.

**Vergleichsbeispiel 9:**

1 Teil Standart[®] Reflexal 214 (Fa. ECKART GmbH &Co.KG) wird mit 1Teil Weißpigment Kronos 2310 mittels eines Zentrifugalmischaggregats (DAC 400 FWC der Fa. Hausschild; Hamm) bei 1000 U/min 5min lang vermischt.
Die Pigmente der Beispiele 1 bis 9 wurden in einen ansonsten unpigmentierten konventionellen Lack auf Basis eines Polyester / CAB-Systems (Bindemittel: 22 Gew.-% CAB 381-2 und 9 Gew.-% CAB 551-0.2 , beide FA. Eastman und 13 Gew.-% Viacryl SC 303, Fa. SurfaceSpecialities) eingearbeitet. Die Pigmentierungshöhe betrugen jeweils 10 Gew.-% bezogen auf den gesamten Lack. Mit einer 50 μm Rakel wurden Rakelabzüge angefertigt und farbmetrisch vermessen. Glanzwerte wurden mittels des Tri-Gloss Glanzmeßgerätes der Fa. Byk-Gardner bei 60° bestimmt und die L,a,b-Werte bei den Beobachtungswinkeln 15°, 25°, 45° und 110° (M 682, Fa. X-Rite). Aus diesen Werten wurde der Flopindex gemäß Formel (2) und in üblicher Weise das Chroma bei 25° berechnet. Die Ergebnisse zeigt Tabelle 1:

Tab. 1: Farbmetrische Charakteristika der Beispiele in Rakelabzügen aus einem konventionellen, unpigmentierten Polyester / CAB-System.

| Probe | Glanz 60° | L* 45° | C* 25° | Flopindex nach DuPont | Al-Anteil im Lack |
|---|---|---|---|---|---|
| Beispiel 1 | 2,5 | 59,0 | 2,8 | 1,6 | 5,0 |
| Beispiel 2 | 10,9 | 65,9 | 1,8 | 0,9 | 5,0 |
| Vergleichsbeispiel 3 | 41,6 | 37,1 | 5,1 | 16,5 | 10,0 |
| Vergleichsbeispiel 4 | 42,9 | 48,1 | 2,6 | 20,0 | 10,0 |
| Vergleichsbeispiel 5 | 40,1 | 46,9 | 2,5 | 20,3 | 10,0 |
| Beispiel 6 | 10,8 | 63,7 | 0,5 | 1,6 | 5,0 |
| Beispiel 7 | 2,4 | 70,7 | 2,3 | 0,8 | 3,3 |
| Beispiel 8 | 2,5 | 62,1 | 0,3 | 1,9 | 3,3 |
| Vergleichsbeispiel 9 | 13,9 | 69,7 | 1,6 | 3,7 | 5,0 |

Alle erfindungsgemäßen Proben weisen ein ähnlich niedriges Chroma C*25° auf, da Metallpigmente aufgrund ihrer Unbuntheit per se über ein geringes Chroma verfügen. Im Helligkeitsflopindex und im Glanz weisen die erfindungsgemäßen Beispiele im Vergleich zu den Vergleichsbeispielen 3 - 5 deutlich niedrigere Werte auf, insbesondere der Helligkeitsflop ist praktisch vollständig verschwunden. Hingegen ist die Helligkeit L*45° bei erfindungsgemäßen Beispielen deutlich höher als bei den Vergleichsbeispielen 3 - 5. Dies hat seinen Grund darin, dass mit einem weißen Pigment generell eine relativ hohe Helligkeit verbunden ist und die Helligkeit bei einem Metallpigment bei diesem Beobachtungswinkel aufgrund des Flops bereits deutlich abgenommen hat.

Das Vergleichsbeispiel 9 weist hinsichtlich Glanz, L*$_{45°}$ Chroma und Helligkeitsflop ähnliche Werte wie die erfindungsgemäßen Beispiele auf. Die Glanzgrade sind jedoch etwas höher. Die rein physikalische Mischung von Weißpigmenten und Aluminiumpigmenten weist hier scheinbar ähnliches Erscheinungsbild wie die erfindungsgemäßen Beispiele auf. Dennoch erscheint diese Mischung weit weniger weiß und ruft beim Beobachter ein größeres "metallisches" Empfinden hervor.

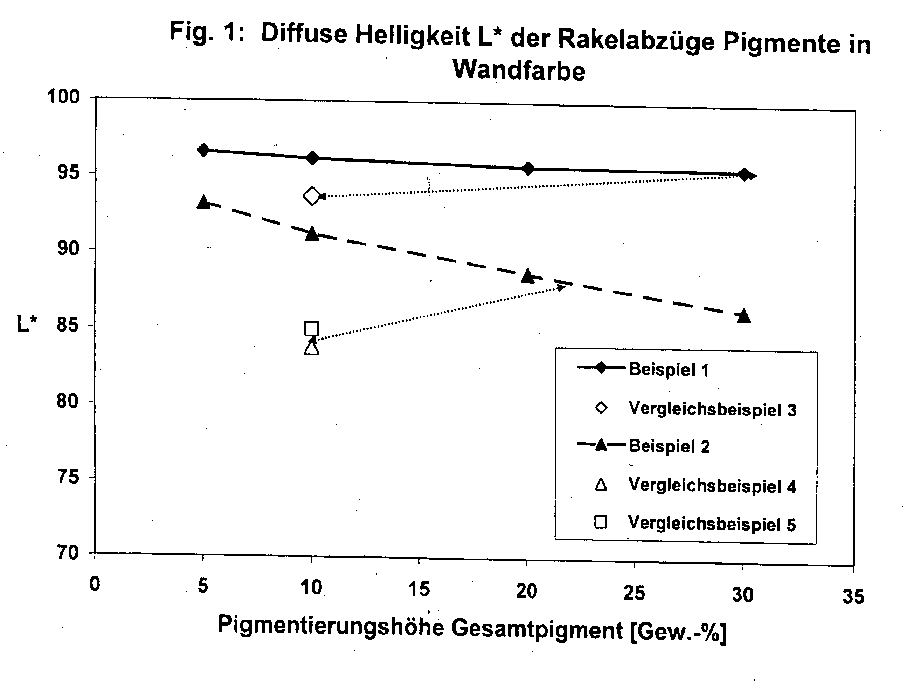

Um dies zu verdeutlichen wurden alle Pigmente der Beispiele 1 bis 9 in die kommerziell erhältliche Wandfarbe Krautol® bei verschiedenen Pigmentierungshöhen eingearbeitet. Von diesen Farben wurde jeweils ein optisch deckender Rakelabzug erstellt (100 μm Rakeltiefe) und als Nullmuster ein Rakelabzug ohne Pigmentierung mit einem IR-reflektierenden Pigment. Zur Ermittlung des "Weißgrades" der Pigmente wurde von allen Rakelabzügen die Helligkeit in diffuser Reflexionsgeometrie gemessen (Minolta CR 410, Fa. Minolta). Zum Vergleich wurde das unbeschichtete bzw. ein mit SiO$_2$ beschichtetes Aluminiumpigment mit vergleichbarer Korngröße in die Wandfarbe eingearbeitet (Pigmentierungshöhe: 10 Gew.-%). Beim Vergleichsbeispiel 4 musste das Pigment, welches in einer Testbenzinpaste vorlag, zuvor mit Aceton gewaschen werden, da es andernfalls nicht in die wässrige Wandfarbe einzuarbeiten war. Die Ergebnisse zeigt Fig. 1.

Fig.1 ist zu entnehmen, dass die Helligkeit und damit der Weißgrad mit zunehmender Konzentration der Pigmente abnehmen. Die Helligkeiten der reinen, unbeschichteten (Vergleichsbeispiele 3 und 4) und der ohne Weißpigment beschichteten Pigmente (Vergleichsbeispiel 5) der Vergleichsbeispiele sind stets kleiner als jene der erfindungsgemäßen Beispiele. Vor allem interessiert der Vergleich der Helligkeiten bei insgesamt gleichem Metallgehalt im Rakelabzug. Die Pfeile markieren jeweils diesen Vergleich. Hier ist erkennbar, dass stets die erfindungsgemäßen Pigmente bei den erfindungsgemäßen Beispielen eine mehr als eine Einheit höhere Helligkeit besitzen. Visuell macht sich dies in einem deutlich höheren Weißgrad bemerkbar. Diese Differenz sowie das visuelle wahrgenommene Glitzerverhalten sind kurz in Tab. 2 dargestellt. Die visuell beurteilten Glitzer- und Weißempfinden wurden nach einer fünfstufigen Skala bewertet:

- sehr stark
- stark
- mittel
- schwach

- sehr schwach

Tab. 2: Diffuse Helligkeiten, visuelles Glitzer- und Weißempfinden in pigmentierter Dispersionsfarbe (Weißgrad)

| Probe | $L^*_{diffus}$ (10 % Metallgehalt) | $\Delta L^*_{diffus} = L^*_{diffus, Weißpigment} - L^*_{diffus, ohne Weißpigment}$ | Visuelles Glitzerempfinden | Visuelles Weißempfinden |
|---|---|---|---|---|
| Beispiel 1 | 95,6 | 1,9 | schwach | sehr stark |
| Vergleichsbeispiel 3 | 93,7 | 0 | sehr stark | sehr stark |
| Beispiel 2 | 89,2 | 5,4 | sehr schwach | sehr stark |
| Vergleichsbeispiel 4 | 83,8 | 0,0 | stark | mittel |
| Vergleichsbeispiel 5 | 85,0 | 1,2 | stark | mittel |
| Beispiel 6 | 89,1 | 5,3 | schwach | stark |
| Beispiel 7 | 88,4 | 4,6 | sehr schwach | stark |
| Beispiel 8 | 88,1 | 4,3 | schwach | stark |
| Vergleichsbeispiel 9 | 88,5 | 4,7 | stark | schwach |

Das visuell beurteilte Glitzerempfinden ist bei den Pigmenten der erfindungsgemäßen Beispiele schwach bzw. sehr schwach ausgeprägt. Die nicht weiß eingefärbten Metallpigmente der Vergleichsbeispiele zeigen hingegen in den Rakelabzügen ein ausgeprägtes Glitzerverhalten. Dies ist dadurch bedingt, dass es sich um sehr große Pigmente handelt, die vom menschlichen Auge individuell innerhalb einer Farbe wahrgenommen werden können. Dies gilt auch für das vergleichende Beispiel 9, welches in den farbmetrischen Charakterisierungen noch sehr ähnliche Werte wie die erfindungsgemäßen Beispiele gezeigt hatte.

Die errechneten Helligkeitsdifferenzen liegen bei den erfindungsgemäßen Pigmenten der erfindungsgemäßen Beispiele über einem Wert von 1,5. Das Pigment des Vergleichsbeispiels 5 (Pigmente mit $SiO_2$-Beschichtung) zeigt gegenüber dem völlig unbeschichteten Metallpigment ebenfalls einen positiven $\Delta L^*$-Wert, jedoch ist der Weißgrad nicht ganz so hoch.

Die gemessenen $\Delta L^*$-Werte erscheinen gering, jedoch ist das menschliche Auge gerade für das Empfinden eines Weißeindruckes sehr empfindlich. Visuell können daher sehr deutliche Unterschiede der mit den erfindungsgemäßen Pigmenten und mit den unbeschichteten Pigmenten pigmentierten Dispersionsfarbe wahrgenommen werden. So ist der visuell beurteilte Weißgrad der erfindungsgemäßen Beispiele durchweg stark bis sehr stark. Das vergleichende Beispiel 9 hingegen zeigt einen nur mittleren Weißgrad. Die Vergrauungsneigung der unbeschichteten Aluminiumpigmente kommt hier stärker zum Tragen. Gleiches gilt für die Vergleichsbeispiele 4 und 5, während 2 ein sehr starkes Weißempfinden hervorruft. In diesem Fall scheint das sehr grobe Aluminiumpigment aufgrund seiner schlechten Deckung wenig Vergrauungstendenz zu besitzen.

Messung der diffusen IR-Reflexion:

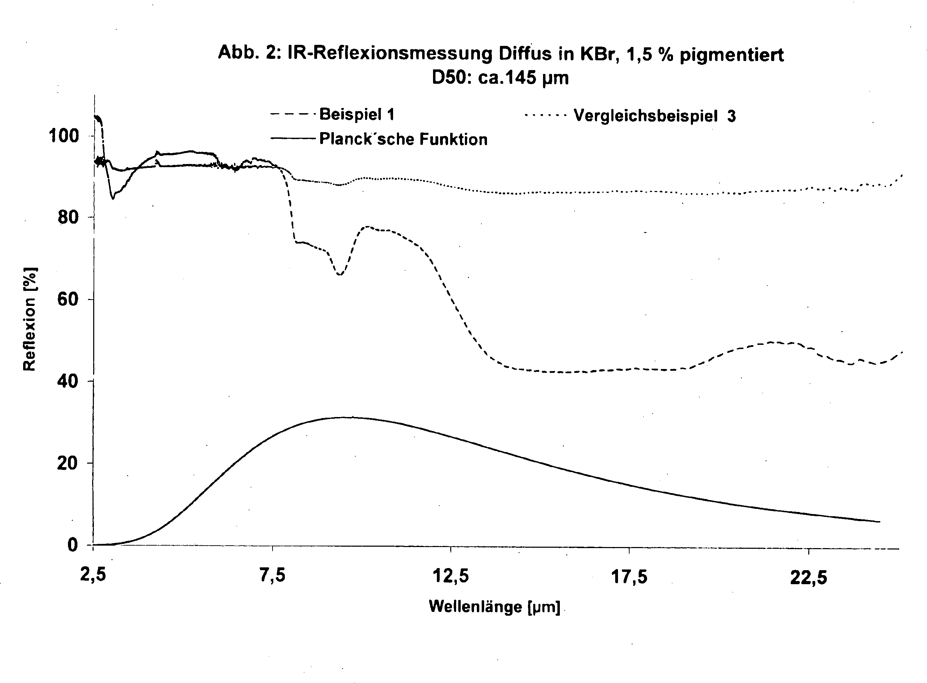

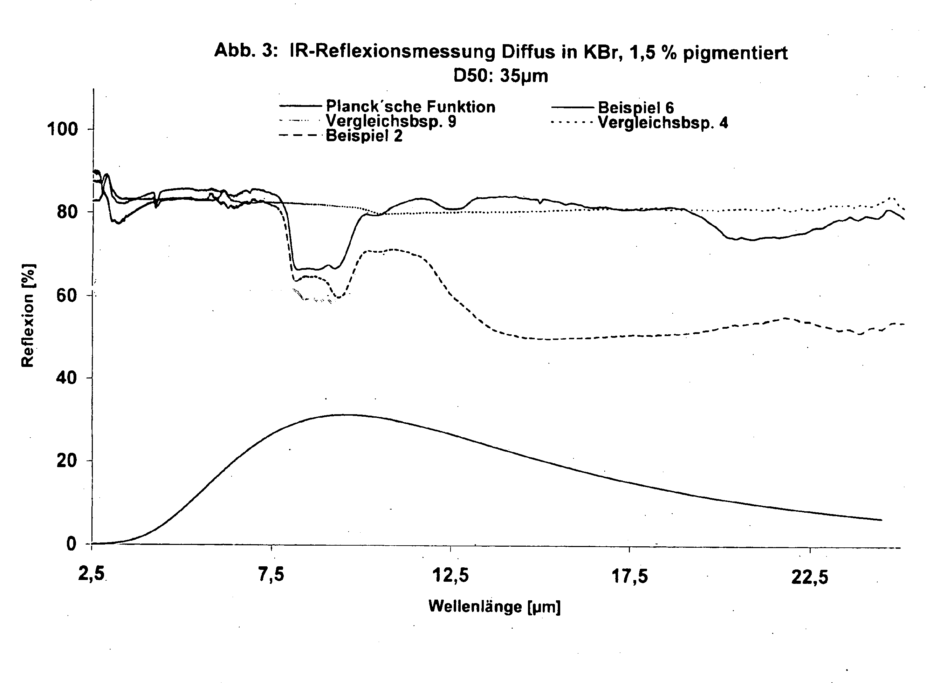

Bei den Pigmenten der Beispiele (bis auf Vergleichsbeispiel 5) wurden IR-Spektren in diffuser Reflexion vermessen. Hierzu wurde zunächst KBr-Pulver in einem Mörser zerkleinert. Anschließend wurden dem KBr in einer Konzentration von 1,5 Gew.-% Pigment hinzu gegeben und homogen miteinander vermengt. Eine tablettenförmige Probenkammer (Durchmesser: ca. 0,8 cm, Tiefe: ca. 2,2 mm) wurde mit dem KBr-Pigment-Gemenge befüllt und dieses angedrückt. Anschließend vermaß man in einem Wellenlängenbereich von 2,5 bis 25 $\mu$m die diffuse Reflexion. Hierzu verwendete man als Meßeinheit Selector (Fa. Specac). Dieses Gerät misst die diffuse IR-Reflexion in einer Viertelkugelgeometrie. Als IR-Gerät wurde ein Avatac 360 Spektrometer der Fa. Thermo verwendet, der Detektor war ein DTGS-Detektor. Es wurde stets als Backgroundspektrum ein reines KBr-Pulver vermessen und das Spektrum des KBr-Pigment-Gemenges hiergegen abgeglichen. Der Vorgang wird dreimal wiederholt und der Mittelwert der Messungen genommen. In Abb. 2 und 3 sind die Spektren einiger Beispiele und Vergleichsbeispiele abgebildet und zusätzlich (maßstabslos) die berechnete Plancksche Strahlungsfunktion bei 300 K eingetragen. In Abb. 2 sind die Spektren der Beispiele und Vergleichsbeispiele mit groben Pigmenten ($d_{50}$= ca. 145 $\mu$m) und in Abb. 3 mit den feineren Pigmenten ($d_{50}$ = ca. 35 $\mu$m) dargestellt.

Ein Vergleich der Spektren der Abb.2 zeigt, dass die Pigmente des erfindungsgemäßen Beispiels 1 eine niedrigere Reflexion besitzen als das unbeschichtete Metallpigment des Vergleichsbeispiels 3. Die ist auf eine gewisse IR-

Absorption durch die TiO$_2$-Pigmente und die SiO$_2$-Matrix der Beschichtung zurückzuführen. Dennoch ist die Reflexion insgesamt hoch genug, um ein IR-Strahlung reflektierendes Pigment zu ergeben. Ähnliche Verhältnisse lassen sich in Abb. 3 für die feineren Pigmente beobachten. Hierbei ist die Reflektion und der Reflektionsgrad insbesondere für das erfindungsgemäße Beispiel 6 deutlich höher als bei den Beispielen 2 oder 4. Dies ist auf die geringe IR-Absorption von ZnS-Pigmenten im vergleich zu TiO$_2$-Pigmenten zurückzuführen.

Dies lässt sich anhand der Tab. 3 nachvollziehen. Hier wurde aus den erhaltenen spektralen IR-Reflexionsspektren der Reflexionsgrad das IR-Reflexionsvermögen nach Formel (1) berechnet, wobei bei der Planck-Funktion eine Temperatur von 300 K eingesetzt wurde.

Tab. 3: Auswertung diffuse IR-Spektren

| Probe | IR-Reflexionsgrad (2,5 bis 25 $\mu$m) [%] | IR-Reflexionsgrad Beschichtung |
|---|---|---|
| Beispiel 1 | 63,4 | 71,5% |
| Beispiel 2 | 62,3 | 76,6% |
| Vergleichsbeispiel 3 | 88,7 | 100% |
| Vergleichsbeispiel 4 | 81,3 | 100% |
| Vergleichsbeispiel 5 | / | / |
| Beispiel 6 | 79,8 | 98,2% |
| Beispiel 7 | / | / |
| Beispiel 8 | / | / |
| Beispiel 9 | 59,7 | 73,4% |

Die Pigmente der erfindungsgemäßen Beispiele besitzen einen IR-Reflexionsgrad von deutlich mehr als 50 %. Der Einfluss der Beschichtungen auf das IR-Reflexionsvermögen ist relativ gering, wie sich aus dem hohen Werten von über 71 % für den IR-Reflexionsgrad Beschichtung ablesen lässt. Insbesondere beim erfindungsgemäßen Beispiel 6 ist der Einfluß der Beschichtung nur sehr gering.

Die Vorteile des erfindungsgemäßen Pigmentes sind daher in der Zusammenschau von hohem IR-Reflexionsvermögen einerseits und weißem Eindruck andererseits zu sehen.

Die Pigment der Vergleichsbeispiels 3 und 4 besitzen noch höhere Reflexionsgrade, da hier keine Beschichtungen vorhanden sind. Aufgrund ihrer vergrauenden Wirkungen und ihres deutlichen Glitzereffektes sind diese Pigmente jedoch nicht in einer Wandfarbeverwendbar. Beim Vergleichsbeispiel 9 hingegen ist der Reflexionsgrad relativ gering, da hier das der Mischung beigegebene TiO$_2$ absorbiert.

Mithin weisen die erfindungsgemäßen IR-reflektierenden Pigmente in der Zusammenschau von hohem IR-Reflexionsvermögen, einen im wesentlichen weißen Aussehen und dem Fehlen der Effektpigment spezifischen Charakteristika wie Glanz und Helligkeitsflop Vorteile gegenüber Mischungen von unbeschichteten Effektpigmenten und weißen Dispersionfarben auf.

**Patentansprüche**

1. IR-Strahlung reflektierendes Pigment, umfassend einen IR-reflektierenden Kern,
**dadurch gekennzeichnet,**
**dass** der IR-Strahlung reflektierende Kern mit einer für IR-Strahlung im wesentlichen durchlässigen und im wesentlichen umhüllenden Beschichtung versehen ist und dass das IR-Strahlung reflektierende Pigment im wesentlichen weiß ist, wobei der IR-Strahlung reflektierende Kern ein plättchenförmiges Metallpigment oder ein sphärisches Metallpartikel ist und wobei die im wesentlichen IR-Strahlung durchlässige Beschichtung eine Metalloxid umfassende Matrix ist, wobei in, auf und/oder unter der für IR-Strahlung im wesentlichen durchlässigen Beschichtung Weißpigmente, die vorzugsweise eine mittlere Primärkorngröße von 180 bis 400 nm aufweisen, angeordnet sind und wobei der Flopindex in einem Bereich von 0 bis 3 liegt und wie folgt definiert ist:

$$\text{Flopindex} = 2,69 \times \frac{(L^*_{15°} - L^*_{110°})^{1,11}}{(L^*_{45°})^{0,86}}$$

2. IR-Strahlung reflektierendes Pigment nach Anspruch 1,
**dadurch gekennzeichnet,**
**dass** die Weißpigmente aus der Gruppe, die aus Titandioxid, Zinkoxid, Magnesiumoxid, Zinksulfid, Calciumfluorid, Lithiumfluorid, Natriumfluorid, Kaliumfluorid, Calciumcarbonat, Lithopone, Magnesiumcarbonat, Bariumsulfat, Bariumtitanat, Bariumferrit und deren Mischungen besteht, ausgewählt werden.

3. IR-Strahlung reflektierendes Pigment nach einem der Ansprüche 1 oder 2,
**dadurch gekennzeichnet,**
**dass** die Weißpigmente im wesentlichen gleichmäßig um den IR-reflektierenden Kern herum angeordnet sind und vorzugsweise in einer Menge von 0,3 bis 10 g, bevorzugt von 0,5 bis 7 g, pro 1 m$^2$ Oberfläche des IR-reflektierenden Kernes in dem IR-reflektierenden Pigment vorhanden sind.

4. IR-Strahlung reflektierendes Pigment nach einem der vorstehenden Ansprüche,
**dadurch gekennzeichnet,**
**dass** das Metall des IR-reflektierende Kernes aus der Gruppe, die aus Aluminium, Kupfer, Zink, Eisen, Silber und Legierungen davon besteht, ausgewählt wird.

5. IR-Strahlung reflektierendes Pigment nach einem der Ansprüche 1 bis 4,
**dadurch gekennzeichnet,**
**dass** der IR-reflektierende Kern plättchenförmiges Aluminiumpigment, die IRdurchlässige Beschichtung SiO$_2$ und das Weißpigment vorzugsweise TiO$_2$, ZnS und/oder ZnO mit einer mittleren Primärkorngröße von vorzugsweise 250 bis 320 nm ist.

6. Verfahren zur Herstellung eines IR-Strahlung reflektierenden Pigments nach einem der Ansprüche 1 bis 5,
**dadurch gekennzeichnet,**
**dass** auf einen IR-reflektierenden Kern eine für IR-Strahlung im wesentlichen durchlässige Beschichtung zusammen mit Weißpigmenten und/oder mit sichtbares Licht streuenden partikelartigen Beschichtungsauswüchsen aufgebracht wird.

7. Verfahren zur Herstellung eines IR-Strahlung reflektierenden Pigments nach Anspruch 6,
**dadurch gekennzeichnet,**
**dass** Weißpigmente zusammen mit Metalloxid mit einem naßchemischen Sol-Gel-Verfahren auf den IR-reflektierenden Kern aufgebracht werden.

8. Verfahren zur Herstellung eines IR-Strahlung reflektierenden Pigments nach Anspruch 6,
**dadurch gekennzeichnet,**
**dass** eine Dispersion umfassend leicht flüchtiges organisches Lösemittel, IR-reflektierende Kerne, Weißpigmente, vorzugsweise mit einer mittleren Größe von 180 bis 400 nm, und organisches filmbildendes Mittel sprühgetrocknet wird.

9. Verwendung eines IR-Strahlung reflektierenden Pigments nach einem der Ansprüche 1 bis 5 in Farben, Lacken, Druckfarben, Sicherheitsdruckfarben und Kosmetika.

10. Verwendung eines IR-Strahlung reflektierenden Pigments nach einem der Ansprüche 1 bis 5 in Dispersionsfarben für den Innen- oder Außenbereich.

11. Beschichtungszusammensetzung,
**dadurch gekennzeichnet,**
**dass** die Beschichtungszusammensetzung ein IR-Strahlung reflektierendes Pigment nach einem der Ansprüche 1 bis 5 enthält.

12. Beschichtungszusammensetzung nach Anspruch 11,
**dadurch gekennzeichnet,**
**daß** die Beschichtungszusammensetzung ein Kosmetikum, Lack, Farbe, insbesondere Druckfarbe, Sicherheitsdruckfarbe oder Dispersionsfarbe, ist.

13. Gegenstand,
**dadurch gekennzeichnet,**

**daß** der Gegenstand mit einem IR-Strahlung reflektierenden Pigment nach einem der Ansprüche 1 bis 5 oder einer Beschichtungszusammensetzung nach Anspruch 11 oder 12 beschichtet ist.

**Claims**

1. Pigment reflecting IR radiation comprising an IR-reflecting core,
   **characterised in that**
   the IR-reflecting core is provided with a coating that is essentially encasing and essentially permeable to IR radiation and the IR radiation reflecting pigment is essentially white, and the IR radiation reflecting core is a platelet-shaped metal pigment or a spherical metal particle, and the coating that is essentially permeable to IR radiation is a matrix comprising a metal oxide, and white pigments with a preferably mean primary grain size of 180 to 400 nm are disposed in, on and/or underneath the coating that is essentially permeable to IR radiation, and the flop index lies with a range of 0 to 3 and is defined as follows:

$$\text{flop index} = 2.69 \times \frac{(L*_{15°} - L*_{110°})^{1.11}}{(L*_{45°})^{0.86}}.$$

2. IR reflecting pigment as claimed in claim 1,
   **characterised in that**
   the white pigments are selected from the group comprising titanium dioxide, zinc oxide, magnesium oxide, zinc sulphide, calcium fluoride, lithium fluoride, sodium fluoride, potassium fluoride, calcium carbonate, lithopone, magnesium carbonate, barium sulphate, barium titanate, barium ferrite and mixtures thereof.

3. IR radiation reflecting pigment as claimed in one of claims 1 or 2,
   **characterised in that**
   the white pigments are distributed essentially uniformly around the IR reflecting core and are preferably contained in the IR reflecting pigment in a quantity of 0.3 to 10 g, preferably 0.5 to 7 g per $m^2$ surface of the IR reflecting core. surface of the IR reflecting core.

4. IR radiation reflecting pigment as claimed in one of the preceding claims,
   **characterised in that**
   the metal of the IR reflecting core is selected from the group comprising aluminium, copper, zinc, iron, silver and alloys thereof.

5. IR radiation reflecting pigment as claimed in one of claims 1 to 4,
   **characterised in that**
   the IR reflecting core is platelet-shaped aluminium pigment, the IR-permeable coating is $SiO_2$ and the white pigment is preferably $TiO_2$, Zns and/or ZnO with a mean primary grain size of preferably 250 to 320 nm.

6. Method of producing an IR radiation reflecting pigment as claimed in one of claims 1 to 5,
   **characterised in that**
   a coating that is essentially permeable to IR radiation is applied together with white pigments and/or with visible light scattering, particulate coating protuberances to an IR reflecting core.

7. Method of producing an IR radiation reflecting pigment as claimed in claim 6,
   **characterised in that**
   white pigments together with metal oxide are applied to the IR reflecting core by means of a wet chemical sol-gel process.

8. Method of producing an IR radiation reflecting pigment as claimed in claim 6,
   **characterised in that**
   a dispersion comprising highly volatile organic solvent, IR reflecting cores, white pigments, preferably with a mean size of 180 to 400 nm, and organic film-forming agent is spray dried.

9. Use of an IR radiation reflecting pigment as claimed in one of claims 1 to 5 in paints, varnishes, printing inks, security printing inks and cosmetics.

**10.** Use of an IR radiation reflecting pigment as claimed in one of claims 1 to 5 in water-based paints for indoor or outdoor applications.

**11.** Coating composition
**characterised in that**
the coating composition contains an IR radiation reflecting pigment as claimed in on of claims 1 to 5.

**12.** Coating composition as claimed in claim 11,
**characterised in that**
the coating composition is a cosmetic, varnish, ink, in particular printing ink, security printing ink or water-based paint.

**13.** Object
**characterised in that**
the object is coated with an IR radiation reflecting pigment as claimed in one of claims 1 to 5 or a coating composition as claimed in claim 11 or 12.


**Revendications**

**1.** Pigment réfléchissant le rayonnement IR, comprenant un noyau réfléchissant l'IR, **caractérisé en ce que** le noyau réfléchissant le rayonnement IR est muni d'un revêtement essentiellement enveloppant et essentiellement perméable au rayonnement IR, et **en ce que** le pigment réfléchissant le rayonnement IR est essentiellement blanc, le noyau réfléchissant le rayonnement IR étant un pigment métallique en forme de plaquette ou une particule métallique sphérique, et le revêtement essentiellement perméable au rayonnement IR étant une matrice qui comprend un oxyde métallique, des pigments blancs qui présentent de préférence une taille de particule primaire moyenne de 180 à 400 nm étant agencés dans, sur et/ou sous le revêtement essentiellement perméable au rayonnement IR, et l'indice de Flop se trouvant dans une plage allant de 0 à 3 et étant défini de la manière suivante :

$$\text{indice de Flop} = 2{,}69 \times \frac{(L^*_{15°} - L^*_{110°})^{1,11}}{(L^*_{45°})^{0,86}}$$

**2.** Pigment réfléchissant le rayonnement IR selon la revendication 1, **caractérisé en ce que** les pigments blancs sont choisis dans le groupe constitué par le dioxyde de titane, l'oxyde de zinc, l'oxyde de magnésium, le sulfure de zinc, le fluorure de calcium, le fluorure de lithium, le fluorure de sodium, le fluorure de potassium, le carbonate de calcium, le lithopone, le carbonate de magnésium, le sulfate de baryum, le titanate de baryum, le ferrite de baryum et leurs mélanges.

**3.** Pigment réfléchissant le rayonnement IR selon l'une quelconque des revendications 1 ou 2, **caractérisé en ce que** les pigments blancs sont agencés de manière essentiellement homogène autour du noyau réfléchissant l'IR et sont de préférence présents en une quantité de 0,3 à 10 g, de préférence de 0,5 à 7 g, par 1 m$^2$ de surface du noyau réfléchissant l'IR dans le pigment réfléchissant l'IR.

**4.** Pigment réfléchissant le rayonnement IR selon l'une quelconque des revendications précédentes, **caractérisé en ce que** le métal du noyau réfléchissant l'IR est choisi dans le groupe constitué par l'aluminium, le cuivre, le zinc, le fer, l'argent et leurs alliages.

**5.** Pigment réfléchissant le rayonnement IR selon l'une quelconque des revendications 1 à 4, **caractérisé en ce que** le noyau réfléchissant l'IR est un pigment d'aluminium en forme de plaquette, le revêtement perméable à l'IR est SiO$_2$ et le pigment blanc est de préférence TiO$_2$, ZnS et/ou ZnO d'une taille de particule primaire moyenne de préférence de 250 à 320 nm.

**6.** Procédé de fabrication d'un pigment réfléchissant le rayonnement IR selon l'une quelconque des revendications 1 à 5, **caractérisé en ce qu'**un revêtement essentiellement perméable au rayonnement IR est appliqué sur un noyau réfléchissant l'IR avec des pigments blancs et/ou avec des excroissances de revêtement particulaires dispersant la lumière visible.

**7.** Procédé de fabrication d'un pigment réfléchissant le rayonnement IR selon la revendication 6, **caractérisé en ce que** des pigments sont appliqués avec un oxyde métallique sur le noyau réfléchissant l'IR par un procédé sol-gel chimique humide.

**8.** Procédé de fabrication d'un pigment réfléchissant le rayonnement IR selon la revendication 6, **caractérisé en ce qu'**une dispersion comprenant un solvant organique très volatil, des noyaux réfléchissant l'IR, des pigments blancs, de préférence d'une taille moyenne de 180 à 400 nm, et un agent filmogène organique est séchée par pulvérisation.

**9.** Utilisation d'un pigment réfléchissant le rayonnement IR selon l'une quelconque des revendications 1 à 5 dans des peintures, des laques, des encres d'impression, des encres d'impression de sécurité et des produits cosmétiques.

**10.** Utilisation d'un pigment réfléchissant le rayonnement IR selon l'une quelconque des revendications 1 à 5 dans des peintures en émulsion pour intérieur ou extérieur.

**11.** Composition de revêtement, **caractérisée en ce que** la composition de revêtement contient un pigment réfléchissant le rayonnement IR selon l'une quelconque des revendications 1 à 5.

**12.** Composition de revêtement selon la revendication 11, **caractérisée en ce que** la composition de revêtement est un produit cosmétique, une laque, une peinture, notamment une encre d'impression, une encre d'impression de sécurité ou une peinture en émulsion.

**13.** Article, **caractérisé en ce que** l'article est revêtu avec un pigment réfléchissant le rayonnement IR selon l'une quelconque des revendications 1 à 5 ou une composition de revêtement selon la revendication 11 ou 12.

Fig. 1: Diffuse Helligkeit L* der Rakelabzüge Pigmente in Wandfarbe

EP 1 963 440 B1

Abb. 2: IR-Reflexionsmessung Diffus in KBr, 1,5 % pigmentiert D50: ca.145 µm

**Abb. 3: IR-Reflexionsmessung Diffus in KBr, 1,5 % pigmentiert**
**D50: 35µm**

Planck'sche Funktion — Beispiel 6
Vergleichsbsp. 9 — Vergleichsbsp. 4
Beispiel 2

Reflexion [%]

Wellenlänge [µm]

EP 1 963 440 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4211560 A1
- DE 10010538 A1
- DE 19501307 A1
- US 5037475 A
- WO 9104293 A
- WO 9623337 A
- WO 2005007754 A
- DE 4035062 A1
- FR 2664160
- US 5271770 A
- EP 1179507 A
- DE 19718459 A1

**In der Beschreibung aufgeführte Nicht-Patentliteratur**

- **K. ROSE ; U. POSSET ; K.-H. HAAS ; M. KÖHL.** *Farbe & Lack,* 2002, vol. 108, 29
- **DR. BECK.** Komfort und Energieeffizienz durch Wärmedämmung. *Otti-Profiforum ''wärmedämmung im Bauwesen,* 09. Marz 2005
- **A.B.J. RODRIGUEZ.** *JOCCA,* 1992, 150-153